# EUROPEAN PATENT SPECIFICATION

(11) **EP 0 489 956 B1**
(45) Date of publication and mention of the grant of the patent: **25.03.1998**
(21) Application number: 90123939.2
(22) Date of filing: 12.12.1990
(51) Int. Cl.: H01S 3/08

(54) **Narrow-band laser apparatus**
Schmalband-Laser-Apparat
Appareil laser à bande étroite

(43) Date of publication of application: 17.06.1992
(73) Proprietor: MATSUSHITA ELECTRIC INDUSTRIAL CO., LTD., Kadoma-shi, Osaka-fu, 571 (JP)
(72) Inventor: Furuya, Nobuaki, Kawasaki (JP); Ono, Takuhiro, Zama-shi, Kanagawa-ken (JP); Horiuchi, Naoya, Kawasaki (JP); Yamanaka, Keiichiro, Kawasaki (JP); Miyata, Takeo, Zama-shi, Kanagawa-ken (JP)
(74) Representative: Tiedtke, Harro, Dipl.-Ing.

(56) References cited:
- EP-A- 0 383 586
- EP-A- 0 402 570
- WO-A-86/03066
- FR-A- 2 402 320
- JOURNAL OF PHYSICS E/SCIENTIFIC INSTRUMENTS, vol. 20, no. 2, February 1987, pages 200-203; K. KÖNIG et al.: "Small line width nanosecond dye laser of high spectral purity with double functional grating"
- IEEE JOURNAL OF QUANTUM ELECTRONICS, vol. QE-23, no. 9, September 1987, pages 1458-1460; M. SUGII et al.: "Simple long-pulse XeC1 laser with narrow-line output"

## Description

This invention relates to a narrow-band laser apparatus.

The excimer laser has attracted attention as a light source for photolithography. The excimer laser can output a laser light beam having efficient power for exposing a photoresist film on a semiconductor wafer at several wavelengths between 353 nm to 193 nm through a laser medium comprising a noble gas, such as krypton and xenon gases, and halogen gas, such as fluorine and chlorine gases. Gain-band width of the excimer laser is approximately one nm which is too large for the exposure light source for photolithography. Band width output laser light of the excimer laser is about 0.5 nm (full width at half maximum). If such relatively broad band laser light is used as an exposing, an achromatic exposing optical system is necessary in exposing apparatus for photolithography. However, in ultraviolet region, less than 350nm, achromatization is difficult because there are few types of optical materials which can be used for a focusing lens system. It is desired to narrow band width of the excimer laser used for the exposure light source whose band-width is around 0.005 nm. Such exposure light source enables a focusing lens system without achromatization to be used, so that simplification of the optical system of the exposing apparatus for photolithography and miniaturization and lowering cost of the exposing apparatus can be realized.

A laser apparatus for exposure which comprises an wavelength selection element provided in its optical resonator for narrowing bandwidth of laser light without attenuation of output power is described in JP-A-63-160287 which is described below.

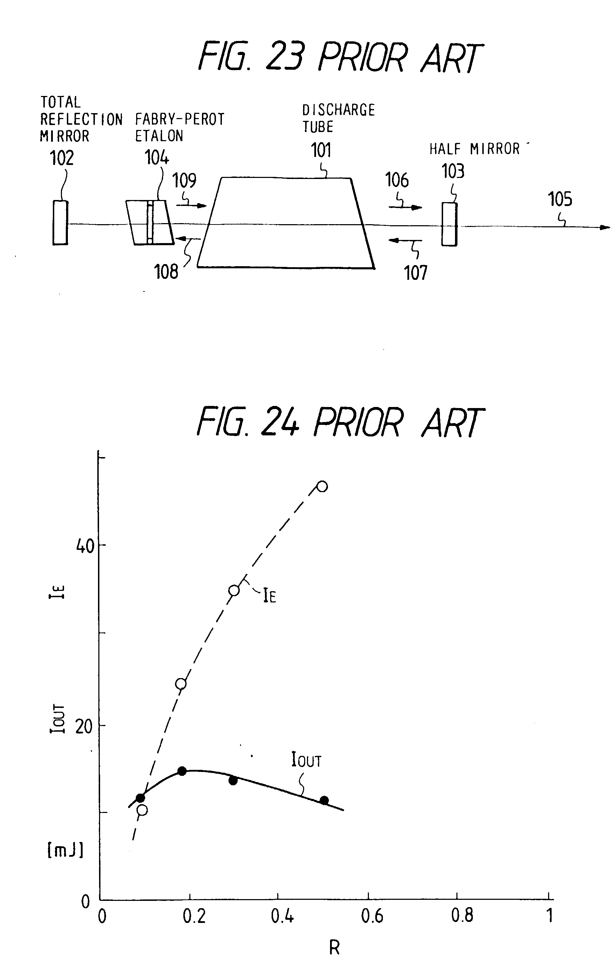

Fig. 23 is a front view of the narrow-band excimer laser of the above-mentioned prior art. In Fig. 23, this prior art laser apparatus comprises an optical resonator including a total reflection mirror 102, a half mirror 103 and a discharge tube 101 provided in a light path of the optical resonator, and a Fabry-Perot etalon 104 as an wavelength selection element. In this laser apparatus, only light whose wavelength is selected by Fabry-Perot etalon 104 is amplified and oscillates, so that an extremely narrow-band laser light beam is obtained.

However in such excimer laser apparatus, there is a drawbacks that because there is high energy light continuously exists in the optical resonator, the wavelength selection element is deteriorate or deformed, so that the selection wavelength will change or output power will decrease. If such excimer laser apparatus is used as a light source for exposure, defected products of integration circuits are manufactured. In other words, maximum power of the excimer laser is limited by high-energy-light resistivity of the selection element.

Further narrow band laser apparatuses are known from FR-A-2 402 320 and EP-A- 0 383 586 WO-A-8 603 066 discloses a laser comprising an optical rotator, a polarising beam splitter and a Pockets cell. The EP-A-0 402 570 as prior art according to Art. 54(3) EPC shows a still a further narrow band laser apparatus.

It is the object of the present invention to provide a narrow band laser apparatus with which a high output power can be achieved.

This object is achieved by the invention as defined in the independent claims 1 to 20.

Advantageous further developments are set out in the dependent claims.

The wavelength selection element comprises one or more Fabry-Perot etalons, gratings, or prisms. The beam polarizing conversion element comprises a quarter-wave plate, a phase retarder prism or a phase retarder mirror. The polarizing beam splitting element comprises a polarizing beam splitter or polarizing beam splitting prism. An echelle grating or echelon grating may be used in replace with the first reflection mirror and the Fabry-Perot etalon. A phase retarder mirror may be used in place with the second mirror and the wavelength phase plate. A polarizing beam splitting prism may be used as a polarizing beam splitting element and wavelength selection element in combination with a Fabry-Perot etalon.

The object and features of the present invention will become more readily apparent from the following detailed description taken in conjunction with the accompanying drawings in which:
Fig. 1 is a front view of a first embodiment of a laser apparatus of the invention;
Fig. 2 is a front view of a second embodiment;
Fig. 3 is a front view of a third embodiment;
Fig. 4 is a front view of a fourth embodiment;
Fig. 5 is a front view of an embodiment not according to the invention;
Fig. 6 is a front view of a fifth embodiment;
Fig. 7 is a front view of a sixth embodiment;
Fig. 8 is a front view of an seventh embodiment;
Fig. 9 is a front view of a eighth embodiment;
Fig. 10 is a front view of a ninth embodiment;
Fig. 11 is a front view of an tenth embodiment;
Fig. 12 is a front view of an embodiment not according to the invention;
Figs 13A to 13C show a first group of equivalent element throughout embodiments;
Figs 14A to 14C show a second group of equivalent element throughout embodiments;
Figs 15A and 15B show a third group of equivalent element throughout embodiments;
Figs 16A to 16C show a fourth group of equivalent element throughout embodiments;
Figs 17A and 17B show a fifth group of equivalent element throughout embodiments;
Fig. 18 is a perspective view of Fig. 13C;
Fig. 19 is a front view of an alternative element of the polarizing beam splitter;
Fig. 20 is a front view of an alternative element of the polarizing beam splitter;
Fig. 21 is an explanatory chart of the first embodiment;
Fig. 22 is an explanatory chart of the tenth embodiment;
Fig. 23 is a front view of a prior art laser apparatus;
Fig. 24 is an explanatory chart of the prior art; and
Fig. 25 is another explanatory chart of the prior art.

The same or corresponding elements or parts are designated at like references throughout the drawings.

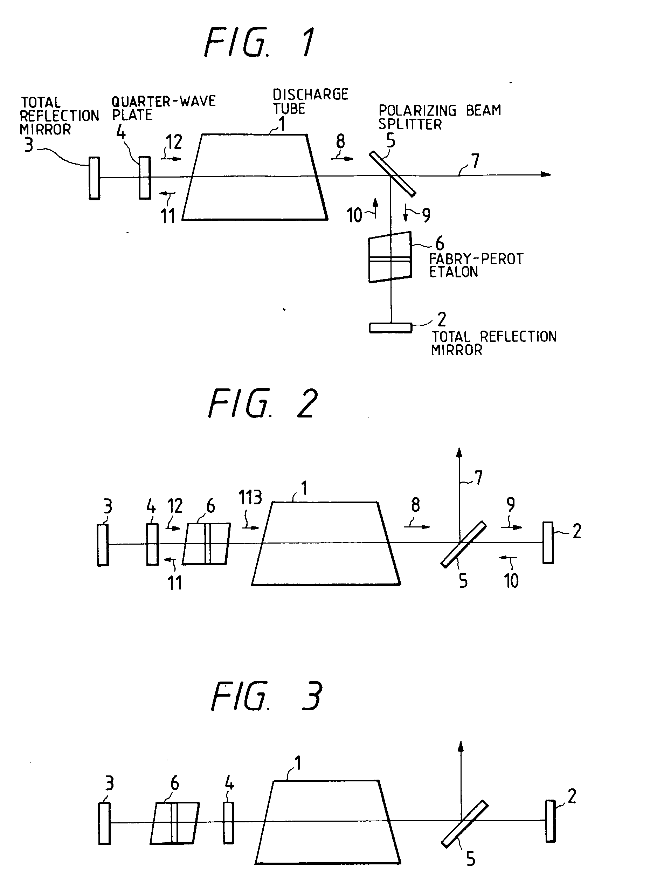

Referring now to the drawings, Fig. 1 is a front view of a first embodiment of a narrow-band excimer laser apparatus of the invention.

In Fig. 1, a discharge tube 1 comprises a mixed gas of noble and halogen gases as a laser medium. An optical resonator comprises total reflection mirrors 2 and 3 and the discharge tube 1 is provided in the light path of the optical resonator between the total reflection mirror 2 and 3 via a polarizing beam splitter 5. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the polarizing beam splitter 5.

A Fabry-Perot etalon 6 as an wavelength selection element is provided between the polarizing beam splitter 5 and the total reflection mirror 2, so that only specified narrow-band light beam is oscillated in the optical resonator.

Hereinbelow will be described operation of the laser apparatus of the first embodiment.

The light beam 8 amplified by the laser medium of the discharge tube 1 is splitted in accordance with polarized components. One polarized component is transmitted through the polarizing beam splitter 5 and outputted as the output light beam 7. Another component light beam, i.e., a light beam 9, is reflected by the polarizing beam splitter 5. The light beam 9 is subjected to wavelength selection by Fabry-Perot etalon 6, and then it is reflected at the total reflection mirror 2. The reflected light beam 10 is transmitted through the Fabry-Perot etalon 6 and reflected by the polarizing beam splitter 5 again and is amplified by the laser medium. The amplified light beam 11 enters the quarter-wave plate 4. The light beam 11 is transmitted through the quarter-wave plate 4 twice via the total reflection mirror 3 to produce a reflection light beam 12. This twice transmission through the quarter-wave plate 4 is equivalent to one transmission through a half wavelength plate. Thus, the light beam 11 polarized in one direction is converted into the reflection light beam 12 having both polarization components. Generally, it is possible to set a ratio between both polarization components of the reflected light beam 12 by changing rotational position of the quarter-wave plate 4 around the center of the axis of the light path. The reflected light 12 is amplified by the laser medium of the discharge tube 1 to produce the light beam 8. One polarization component of the light beam 8 is transmitted through the polarizing beam splitter 5 as the output light beam 7. Another component is reflected at the polarizing beam splitter 5 as the light beam 9 which maintains oscillation. Here, lasing coupling ratio of the output light beam 8 can be changed by varying ratio between intensities of the output light beam 7 and reflected light beam 9 by rotation of the quarter-wave plate 4. As mentioned above, an intensity of the output light beam 7 is larger than that of the light beam 9 to the extent of a gain of the laser medium so that deformation and deterioration of the Fabry-Perot etalon 6 is considerably reduced.

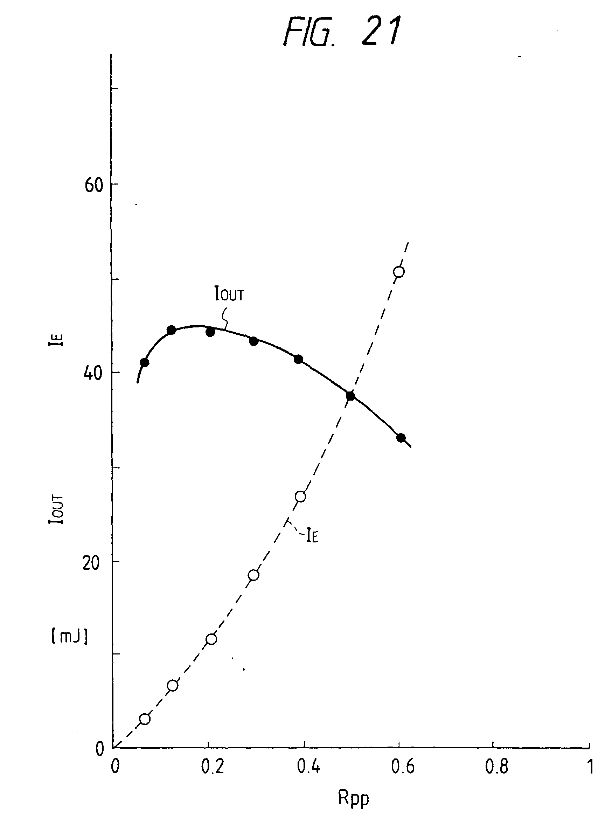

Fig. 21 shows an experimental result showing a relationship between output laser light intensity Iout and light intensity I_{E} at the Fabry-perot etalon 6 of the first embodiment with respect to ratio of the light beam 9 to the light beam 8, i.e., coupling factor for laser oscillation. The result is obtained using KrF excimer laser of Fig. 1. The mixed gas of laser medium comprises 0.22% of F₂, 4.4% of Kr, and remains of He. Full pressure is 1800 mb. Laser oscillation is performed by application of a supply voltage of 28 KV to the discharge tube 1. The resultant shows Iout and Fabry-Perot etalon load I_{E} per one pulse under this condition. Fig. 24 shows another experimental result under the same condition, which shows the same relation with respect to reflectance R of a half mirror 103 of the prior art of Fig. 23. In Fig. 21, the maximum output laser light intensity Iout is about 44 mJ and at the same time, Fabry-Perot etalon load I_{E} is about 10 mJ. On the other hand, in Fig. 24 of prior art, the maximum output laser light intensity Iout is about 14 mJ and at the same time, etalon load I_{E} is about 23 mJ. Therefore, output light intensity Iout of the first embodiment is about three times that of the prior art of Fig. 23, on the other hand, Fabry-Perot etalon load I_{E} is about 58% of the prior art.

Hereinbelow will be described a second embodiment. Fig. 2 is a front view of the second embodiment of a laser apparatus of the invention. In Fig. 2, an optical resonator comprises total reflection mirrors 2 and 3. A discharge tube 1 is provided in the light path of the optical resonator between the total reflection mirror 2 and 3. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the polarizing beam splitter 5.

A Fabry-Perot etalon 6 as an wavelength selection element is provided between the discharge tube 1 and the quarter-wave plate 4, so that only specified narrow-band light beam is oscillated in the optical resonator. This embodiment readily provides S polarized component light because the polarizing beam splitter for reflecting S polarizing component can be provided readily.

Hereinbelow will be described operation of the laser apparatus of the second embodiment.

The light beam 8 amplified by the laser medium of the discharge tube 1 is splitted in accordance with polarized components. One polarized component is outputted as the output light beam 7. Another component light beam, i.e., a light beam 9, is transmitted through the polarizing beam splitter 5. The light beam 9 is reflected at the total reflection mirror 2. The reflected light beam 10 is transmitted through the polarizing beam splitter 5 again and is amplified by the laser medium. The amplified light beam is transmitted through the Fabry-Perot etalon 6 where an wavelength selection is performed. The light beam 11 from the Fabry-Perot etalon 6 is transmitted through the quarter-wave plate 4 twice via the total reflection mirror 3 to produce a reflection light beam 12. This twice transmission through the quarter-wave plate 4 is equivalent to one transmission through a half wavelength plate. Thus, the light beam 11 polarized in one direction is converted into the reflection light beam 12 having both polarization components. Generally, it is possible to set a ratio between both polarization components of the reflected light beam 12 by changing rotational position of the quarter-wave plate 4 around the center of the axis of the light path. The reflected light 12 is transmitted through the Fabry-Perot etalon 6. The light beam 113 from the Fabry-Perot etalon 6 is amplified by the laser medium of the discharge tube 1 to produce the light beam 8. One polarization component of the light beam 8 is reflected at the polarizing beam splitter 5 as the output light beam 7. Another component is transmitted through the polarizing beam splitter 5 as the light beam 9 which maintains oscillation. As mentioned above, an intensity of the output light beam 7 is larger than that of the light beam 113 to the extent of a gain of the laser medium so that deformation and deterioration of the Fabry-Perot etalon 6 is reduced. The light load of the Fabry-perot etalon 6 used in the second embodiment is slightly larger than that of the first embodiment. This embodiment readily provides P polarizing component.

Hereinbelow will be described a third embodiment. Fig. 3 is a front view of the third embodiment of a laser apparatus of the invention. Basic structure of the third embodiment is the same as that of the second embodiment. There is a difference that the Fabry-Perot etalon 6 is provided between the quarter-wave plate 4 and the total reflection mirror 3. Basic operation of the third embodiment is the same as that of the second embodiment. Thus, a detailed description is omitted.

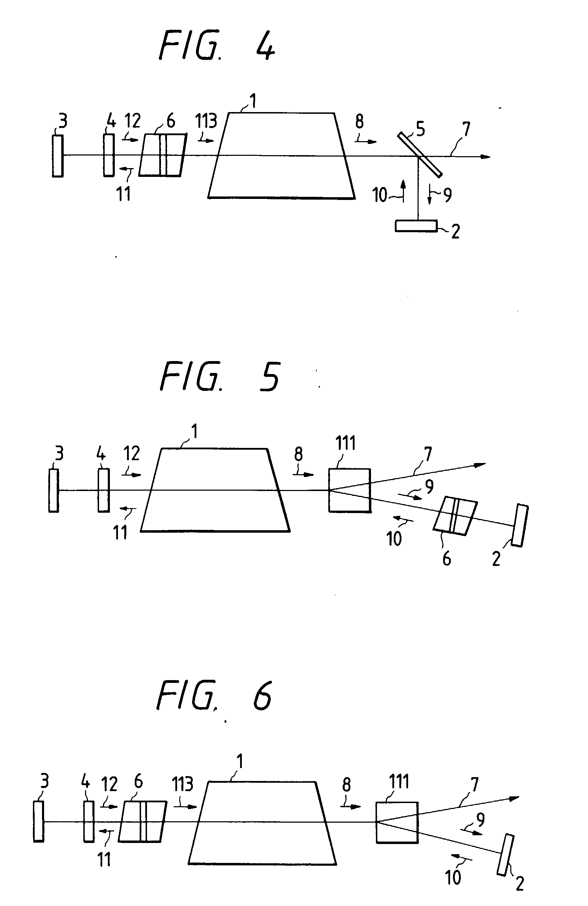

Hereinbelow will be described a fourth embodiment. Fig. 4 is a front view of the fourth embodiment of a laser apparatus of the invention. In Fig. 4, an optical resonator comprises total reflection mirrors 2 and 3. A discharge tube 1 is provided in the light path of the optical resonator between the total reflection mirror 2 and 3. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the polarizing beam splitter 5.

A Fabry-Perot etalon 6 as an wavelength selection element is provided between the discharge tube 1 and the quarter-wave plate 4, so that only specified narrow-band light beam is oscillated in the optical resonator.

Hereinbelow will be described operation of the laser apparatus of the fourth embodiment.

The light beam 8 amplified by the laser medium of the discharge tube 1 is splitted in accordance with polarized components. One polarized component is outputted as the output light beam 7. Another component light beam, i.e., a light beam 9, is reflected at the polarizing beam splitter 5. The light beam 9 is reflected at the total reflection mirror 2. The reflected light beam 10 is reflected at the polarizing beam splitter 5 again and is amplified by the laser medium. The amplified light beam is transmitted through the Fabry-Perot etalon 6 where an wavelength selection is performed. The light beam 11 from the Fabry-Perot etalon 6 is transmitted through the quarter-wave plate 4 twice via the total reflection mirror 3 to produce a reflection light beam 12. This twice transmission through the quarter-wave plate 4 is equivalent to one transmission through a half wavelength plate. Thus, the light beam 11 polarized in one direction is converted into the reflection light beam 12 having both polarization components. The reflected light 12 is transmitted through the Fabry-Perot etalon 6. The light beam 113 from the Fabry-Perot etalon 6 is amplified by the laser medium of the discharge tube 1 to produce the light beam 8. One polarization component of the light beam 7 is transmitted through the polarizing beam splitter 5 as the output light beam. Another component is reflected at the polarizing beam splitter 5 as the light beam 9 which maintains oscillation. As mentioned above, an intensity of the output light beam 7 is larger than that of the light beam 113 to the extent of a gain of the laser medium so that deformation and deterioration of the Fabry-Perot etalon 6 is reduced. The light load of the Fabry-perot etalon 6 used in the fourth embodiment is slightly larger than that of the first embodiment. This embodiment readily provides P polarized light because the polarizing beam splitter for transmitting P polarizing component can be provided readily.

Hereinbelow will be described an embodiment not according to the invention. Fig. 5 is a front view of this embodiment of a laser apparatus. In Fig. 5, a discharge tube 1 comprises a mixed gas of noble and halogen gases as a laser medium. An optical resonator comprises total reflection mirrors 2 and 3 and the discharge tube 1 is provided in the light path of the optical resonator between the total reflection mirrors 2 and 3. When the discharge tube 1 is excited a laser beam of ultraviolet is generated there. A quarter-wave plate 4 as a polarizing conversion element for changing ratio of P to S polarizing components and an Wollaston prism 111 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the Wollaston prism 111.

A Fabry-Perot etalon 6 as an wavelength selection element is provided between the Wollaston prism 111 and the total reflection mirror 2, so that only specified narrow-band light beam is oscillated in the optical resonator.

Hereinbelow will be described operation of the laser apparatus of this embodiment not according to the invention.

The light beam 8 amplified by the laser medium of the discharge tube 1 is splitted in accordance with polarized components. One polarized component is outputted as the output light beam 7. Another component light beam, i.e., a light beam 9, is transmitted through the Wollaston prism 111. The light beam 9 is subjected to wavelength selection by Fabry-Perot etalon 6, and then it is reflected at the total reflection mirror 2. The reflected light beam 10 is transmitted through the Fabry-Perot etalon 6 and the Wollaston prism 111 again and is amplified by the laser medium. The amplified light beam 11 enters the quarter-wave plate 4. The light beam 11 is transmitted through the quarter-wave plate 4 twice via the total reflection mirror 3 to produce a reflection light beam 12. This twice transmission through the quarter-wave plate 4 is equivalent to one transmission through a half wavelength plate. Thus, the light beam 11 polarized in one direction is converted into the reflection light beam 12 having both polarization components. The reflected light 12 is amplified by the laser medium of the discharge tube 1 to produce the light beam 8. One polarization component of the light beam 8 is transmitted through the Wollaston prism 111 as the output light beam 7. Another component is transmitted through the Wollaston prism 111 as the light beam 9 which maintains oscillation. As mentioned above, an intensity of the output light beam 7 is larger than that of the light beam 9 to the extent of a gain of the laser medium so that deformation and deterioration of the Fabry-Perot etalon 6 is considerably reduced.

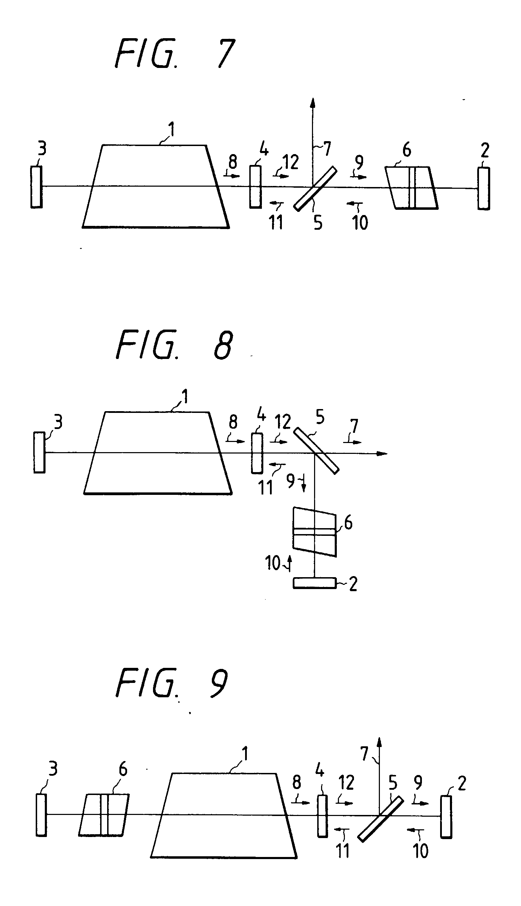

Hereinbelow will be described a fifth embodiment. Fig. 6 is a front view of the fifth embodiment of a laser apparatus of the invention. In Fig. 6, an optical resonator comprises total reflection mirrors 2 and 3. A discharge tube 1 is provided in the light path of the optical resonator between the total reflection mirror 2 and 3. When the discharge tube 1 is excited a laser beam of ultraviolet is generated there. A quarter-wave plate 4 as a polarizing conversion element for changing ratio of P to S polarizing components and an Wollaston prism 111 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the Wollaston prism 111.

A Fabry-Perot etalon 6 as an wavelength selection element is provided between the discharge tube 1 and the quarter-wave plate 4, so that only specified narrow-band light beam is oscillated in the optical resonator.

Hereinbelow will be described operation bf the laser apparatus of the fifth embodiment.

The light beam 8 amplified by the laser medium of the discharge tube 1 is splitted in accordance with polarized components. One polarized component is splitted and outputted as the output light beam 7. Another component light beam, i.e., a light beam 9, is splitted and bended by the Wollaston prism 111. The light beam 9 is reflected at the total reflection mirror 2. The reflected light beam 10 is transmitted through the Wollaston prism 111 again which returns the light beam 10 to a light path to the discharge tube 1. The light beam from the Wollaston prism 111 is amplified by the laser medium. The amplified light beam is transmitted through the Fabry-Perot etalon 6 where an wavelength selection is performed. The light beam 11 from the Fabry-Perot etalon 6 is transmitted through the quarter-wave plate 4 twice via the total reflection mirror 3 to produce a reflection light beam 12. This twice transmission through the quarter-wave plate 4 is equivalent to one transmission through a half wavelength plate. Thus, the light beam 11 polarized in one direction is converted into the reflection light beam 12 having both polarization components. The reflected light 12 is transmitted through the Fabry-Perot etalon 6. The light beam 113 from the Fabry-Perot etalon 6 is amplified by the laser medium of the discharge tube 1 to produce the light beam 8. One polarization component of the light beam 8 is bended in one direction by the Wollaston prism 111 is outputted as output light beam 7. Another component is bended in another direction as the light beam 9 which maintains oscillation. As mentioned above, an intensity of the output light beam 7 is larger than that of the light beam 113 to the extent of a gain of the laser medium so that deformation and deterioration of the Fabry-Perot etalon 6 is reduced. The light load of the Fabry-perot etalon 6 used in the second embodiment is slightly larger than that of the first embodiment.

Hereinbelow will be described a sixth embodiment. Fig. 7 is a front view of the sixth embodiment of a laser apparatus of the invention.

In Fig. 7, a discharge tube 1 comprises a mixed gas of noble and halogen gases as a laser medium. An optical resonator comprises total reflection mirrors 2 and 3 and the discharge tube 1 is provided in the light path of the optical resonator between the total reflection mirror 2 and 3. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is transmitted through the quarter-wave plate 4 and is separated into one polarized light beam 7 outputted externally and another polarized light beam 9 by the polarizing beam splitter 5.

A Fabry-Perot etalon 6 as an wavelength selection element is provided between the polarizing beam splitter 5 and the total reflection mirror 2, so that only specified narrow-band light beam is oscillated in the optical resonator.

Hereinbelow will be described operation of the laser apparatus of the sixth embodiment.

The light beam 8 amplified by the laser medium of the discharge tube 1 is splitted in accordance with polarized components. One polarized component is outputted as the output light beam 7. Another component light beam, i.e., a light beam 9, is transmitted through the polarizing beam splitter 5. The light beam 9 is subjected to wavelength selection by Fabry-Perot etalon 6, and then it is reflected at the total reflection mirror 2. The reflected light beam 10 is transmitted through the Fabry-Perot etalon 6 and the polarizing beam splitter 5 again and is amplified by the laser medium after transmission through quarter-wave plate 4. The light beam 11 is transmitted through the quarter-wave plate 4 twice via the total reflection mirror 3. This twice transmission through the quarter-wave plate 4 is equivalent to one transmission through a half wavelength plate. Thus, the light beam 11 polarized in one direction is converted into the reflection light beam 12 having both polarization components. The reflected light at the total reflection mirror is amplified by the laser medium of the discharge tube 1 to produce the light beam 8. One polarization component of the light beam 12 is reflected at the polarizing beam splitter 5 as the output light beam 7. Another component is transmitted through the polarizing beam splitter 5 as the light beam 9 which maintains oscillation. As mentioned above, an intensity of the output light beam 7 is larger than that of the light beam 9 to the extent of a gain of the laser medium so that deformation and deterioration of the Fabry-Perot etalon 6 is considerably reduced. Light load of the quarter-wave plate 4 is lager than that would be in the case that the quarter-wave plate 4 is locate between the discharge tube 1 and the total reflection mirror 3. However, output efficiency is equivalent.

Hereinbelow will be described an seventh embodiment. Fig. 8 is a front view of the seventh embodiment of a laser apparatus of the invention.

In Fig. 8, a discharge tube 1 comprises a mixed gas of noble and halogen gases as a laser medium. An optical resonator comprises total reflection mirrors 2 and 3 and the discharge tube 1 is provided in the light path of the optical resonator between the total reflection mirror 2 and 3 via a polarizing beam splitter 5. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is separated into one polarized light beam 7 outputted externally and another polarized light beam 9 by the polarizing beam splitter 5 after transmission through the quarter-wave plate.

A Fabry-Perot etalon 6 as an wavelength selection element is provided between the polarizing beam splitter 5 and the total reflection mirror 2, so that only specified narrow-band light beam is oscillated in the optical resonator.

Hereinbelow will be described operation of the laser apparatus of the seventh embodiment.

The light beam 8 amplified by the laser medium of the discharge tube 1 is splitted in accordance with polarized components after transmission through the quarter-wave plate 4. One polarized component is transmitted through the polarizing beam splitter 5 and outputted as the output light beam 7. Another component light beam, i.e., a light beam 9, is reflected by the polarizing beam splitter 5. The light beam 9 is subjected to wavelength selection by Fabry-Perot etalon 6, and then it is reflected at the total reflection mirror 2. The reflected light beam 10 is transmitted through the Fabry-Perot etalon 6 and reflected by the polarizing beam splitter 5 again and is amplified by the laser medium after transmission through the quarter-wave plate 4. The light beam 11 is transmitted through the quarter-wave plate 4 twice via the total reflection mirror 3. This twice transmission through the quarter-wave plate 4 is equivalent to one transmission through a half wavelength plate. Thus, the light beam 11 polarized in one direction is converted into the light beam 12 having both polarization components. The light beam 12 is amplified by the laser medium of the discharge tube 1. One polarization component of the light beam 12 is transmitted through the polarizing beam splitter 5 as the output light beam 7. Another component is reflected at the polarizing beam splitter 5 as the light beam 9 which maintains oscillation. As mentioned above, an intensity of the output light beam 7 is larger than that of the light beam 9 to the extent of a gain of the laser medium so that deformation and deterioration of the Fabry-Perot etalon 6 is considerably reduced. Light load of the quarter-wave plate 4 is lager than that would be in the case that the quarter-wave plate 4 is locate between the discharge tube 1 and the total reflection mirror 3. However, output efficiency is equivalent. This embodiment readily provides P polarized component light.

Hereinbelow will be described a eighth embodiment. Fig. 9 is a front view of the eighth embodiment of a laser apparatus of the invention.

In Fig. 9, a discharge tube 1 comprises a mixed gas of noble and halogen gases as a laser medium. An optical resonator comprises total reflection mirrors 2 and 3 and the discharge tube 1 is provided in the light path of the optical resonator between the total reflection mirror 2 and 3. When the discharge tube 1 is excited a laser beam of ultraviolet is generated there. A quarter-wave plate 4 as a polarizing conversion element for changing ratio of P to S polarizing components and a polarizing beam splitter 5 as a polarizing beam splitting element are provided in the light path of the optical resonator, as shown. An output light beam 8 amplified by the laser medium of the discharge tube 1 is transmitted through the quarter-wave plate 4. A Light beam from the quarter-wave plate 4 is separated into one polarized light beam 7 outputted externally and another polarized light beam 9 by the polarizing beam splitter 5.

A Fabry-Perot etalon 6 as an wavelength selection element is-provided between the discharge tube 1 and the total reflection mirror 3, so that only specified narrow-band light beam is oscillated in the optical resonator.

Hereinbelow will be described operation of the laser apparatus of the eighth embodiment.

The light beam 8 amplified by the laser medium of the discharge tube 1 is splitted in accordance with polarized components after transmission through the quarter-wave plate 4. One polarized component is outputted as the output light beam 7. Another component light beam, i.e., a light beam 9, is transmitted through the polarizing beam splitter 5. The light beam 9 is reflected at the total reflection mirror 2. The reflected light beam 10 is transmitted through the polarizing beam splitter 5 again and is amplified by the laser medium after transmission through the quarter-wave plate 4. The light beam 11 is transmitted through the quarter-wave plate 4 twice via the total reflection mirror 3. This twice transmission through the quarter-wave plate 4 is equivalent to one transmission through a half wavelength plate. Thus, the light beam 11 polarized in one direction is converted into the reflection light beam 12 having both polarization components. The light beam from the quarter-wave plate 4 is amplified by the laser medium and then transmitted through the fabry-Perot etalon 6. The amplified light beam and reflected light at the total reflection mirror 3 is subjected to wavelength selection by the Fabry-Perot etalon 6. A light beam after wave-length selection is amplified by the laser medium of the discharge tube 1 to produce the light beam 8. One polarization component of the light beam 12 is reflected at the polarizing beam splitter 5 as the output light beam 7. Another component is transmitted through the polarizing beam splitter 5 as the light beam 9 which maintains oscillation. As mentioned above, an intensity of the output light beam 7 is larger than that of the light beam 9 to the extent of a gain of the laser medium so that deformation and deterioration of the Fabry-Perot etalon 6 is considerably reduced. The light load of the Fabry-perot etalon 6 used in the ninth embodiment is slightly larger than that of the first embodiment.

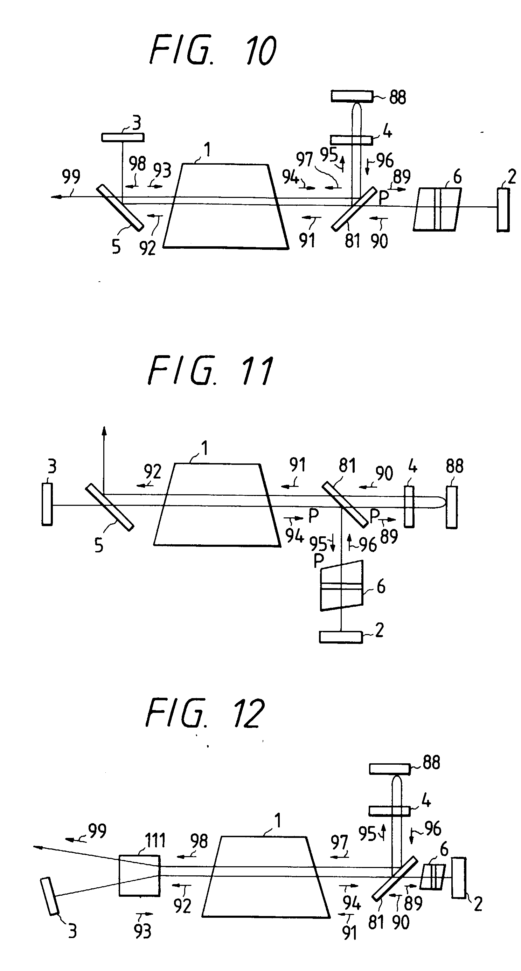

Herein below will be described a ninth embodiment of the invention with referring to Fig. 10.

Fig. 10 is a front view of ninth embodiment of a narrow-band laser apparatus. In Fig. 10, an optical resonator comprises total reflection mirrors 2 and 3 and a discharge tube 1 is provided in the light path of the optical resonator between the total reflection mirrors 2 and 3 which includes a mixed gas of noble and halogen gases as a laser medium. When the discharge tube 1 is excited, a laser beam of ultraviolet is generated there. In a light path of the resonator a polarizing beam splitter 81 is provided between the discharge tube 1 and the first total reflection mirror 2. A polarizing beam splitter 5 is provided between the discharge tube 1 and the second total reflection mirror 3. The polarizing beam splitter 81 separates propagation directions of light beams having different polarizing components. However, a portion of one polarizing component is reflected at the polarizing beam splitter 81 and other portion is transmitted through the polarizing beam splitter 81. For example, the polarizing beam splitter 81 reflects 100% of S polarizing component but transmits a ratio T of P polarizing component and reflects a ratio (1-T) of P polarizing component. The ratio T ranges from 0.005 to 0.8 approximately. The polarizing beam splitter 5 separates propagation direction of light beams of different polarizing directions. For example, it transmits 100% of S polarizing light and reflects 100% of P polarizing light. Therefore, S polarizing light 99 is outputted. A Fabry-Perot etalon 6 is provided between the polarizing beam splitter 81 and the first total reflection mirror 2 as an wavelength selection element. A quarter-wave plate 4 and a third total reflection mirror are provided in the light path separated at the polarizing beam splitter 81, i.e., the light path other than the light path of the resonator for maintaining oscillation.

Hereinbelow will be described operation of the ninth embodiment.

The polarizing beam splitter 81 transmits amplified P polarizing beam 94 incident thereto partially. The transmitted P polarizing light beam 89 enters the Fabry-Perot etalon 6 as an wavelength selection element, which selects only a given wavelength component from the light beam 89. Then the light beam transmitted through the Fabry-Perot etalon 6 is reflected at the first total mirror 2. The polarizing beam splitter 81 transmits a portion of the light beam 90 (a light beam 91) because the light beam 90 is a P polarizing beam. The discharge tube 1 amplifies the light beam 91 to output a light beam 92. The polarizing beam splitter 5 reflects the light beam 92 because the light beam 12 is polarized. The transmitted light beam is reflected at the second total reflection mirror 3 and then is reflected at the polarizing beam splitter 5 again as a light beam 93. The light beam 93 is amplified by the discharge tube 1 to output a light beam 94. A portion of the light beam 94 transmits the polarizing beam splitter 81 as a light beam 89 which maintains oscillation in the similar manner mentioned earlier. Other portion of the light beam 94 is reflected at the polarizing beam splitter 81 as a light beam 95. The light beam 95 is transmitted through the quarter-wave plate 4. The transmitted light beam is reflected at the third total mirror 88 and transmits the quarter-wave plate 4 again where P polarizing beam is converted into S polarizing beam, i.e., a light beam 96. This twice transmitting through the quarter-wave plate 4 is equivalent to one transmitting though a half-wave plate. It is known that if an optical axis of the quarter-wave plate 4 is set such that its optical angle has an inclination angle of 45° with respect to polarizing plane of the incident light, the P polarizing incident light is converted into S polarizing light totally. The polarizing beam splitter 81 reflects 100% of S polarizing light beam 96 to produce S polarizing light beam 97 which is amplified by the discharge tube 1. The amplified S polarizing light beam 98 is transmitted through the polarizing beam splitter 5 entirely to output S polarizing output light beam 99.

As mentioned above, deformation and deterioration of the Fabry-Perot etalon 6 decreases considerably because an intensity of the output light beam 99 is larger than that of the light beam 89 incident to the Fabry-Perot etalon 6 by the gain of the laser medium, i.e., the output light beam is taken out after amplifying by the discharge tube 1. Deformation and deterioration of the Fabry-Perot etalon 6 in this embodiment decrease further compared with the first embodiment because the light beam 90 whose wavelength is selected is amplified by the discharge tube 1 three times, on the other hand, the light beam 10 in Fig. 1 whose wavelength is selected is amplified twice.

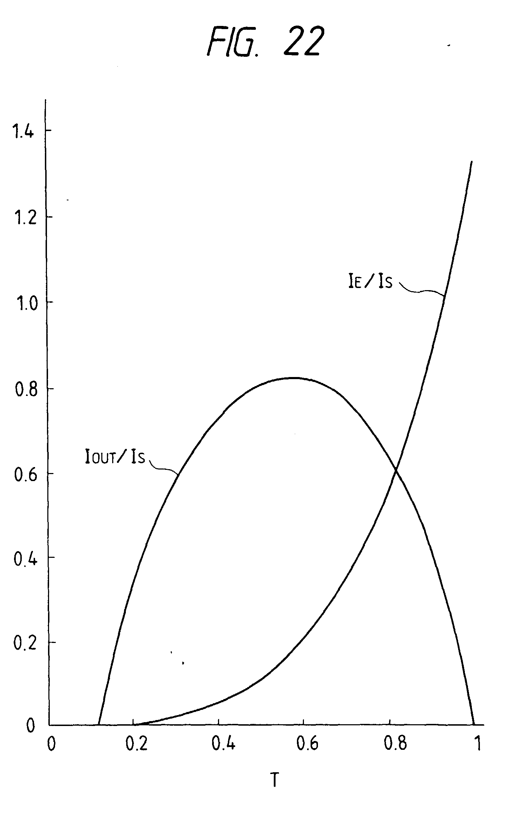

Fig. 22 shows calculation results showing relationship between light intensity of output light beam 99 and light intensity of the beam 89 as light load of the Fabry-Perot etalon 6 with respect to transmittance of P component in the polarizing beam splitter 81. This result is obtained by modified equations described at "Saturation Effects in High-Gain Lasers" by W.W. RIGROD, Journal of Applied Physics, Vol. 36, No8, P2487-p2490, August 1965(Eqs. 7 and 11 of the document). The results show output light intensity Iout/Is and etalon load light intensity I_{E}/Is which are normalized by saturation light intensity Is with respect to transmittance of P polarizing light beam of polarizing beam splitter 8.

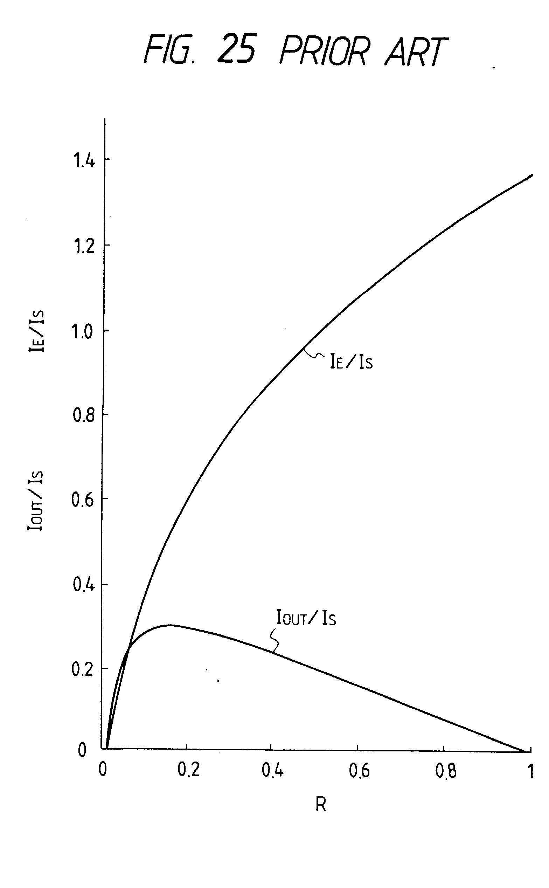

Fig. 25 shows calculation results showing relationship between light intensity of output light beam and light intensity of the beam 108 as light load of the Fabry-Perot etalon 104 of the prior art of Fig. 23. This result is obtained by the equations of the above-mentioned document. The results show output light intensity Iout/Is and etalon load light intensity I_{E}/Is which are normalized by saturation light intensity Is with respect to reflectance R of the half mirror 103.

Comparing the result shown in Fig. 22 of the embodiment of the invention with the result shown in Fig. 25 of the prior art, it is clear that the embodiment of the invention can output the same Iout with smaller value I_{E} than that of the prior art of Fig. 23. In other words, in Fig. 22, when Iout/Is = 0.3, I_{E}/Is = 0.004, on the other hand, in Fig. 25, I_{E}/Is = 0.41 where the later is more than hundred times the former. Therefore, light intensity of incident light to the Fabry-Perot etalon 6 is reduced considerably. Moreover, there is a remarkable feature as follows:

In Fig. 25 of the prior art, when a value of R is 0.15, the maximum output value Iout/Is = 0.31 is obtained. On the other hand, in the embodiment of the present invention, when T= 0.58, the maximum output Iout/Is= 0.83 is obtained. Thus, the output power of the invention is 2.7 times that of the prior art. That indicates the laser apparatus of the invention is excellent as a laser apparatus.

As mentioned above, in this embodiment, light energy transmitted through the Fabry-Perot etalon 6 is largely reduced and a narrow-band laser apparatus showing an excellent characteristic of output efficiency.

Herein below will be described an tenth embodiment of the invention with referring to Fig. 11.

Fig. 11 is a front view of the tenth embodiment of a narrow-band laser apparatus. In Fig. 11, an optical resonator comprises total reflection mirrors 2 and 3 and a discharge tube 1 is provided in the light path of the optical resonator between the total reflection mirrors 2 and 3 which includes a mixed gas of noble and halogen gases as a laser medium. When the discharge tube 1 is excited, a laser beam of ultraviolet is generated there. In a light path of the resonator a polarizing beam splitter 81' is provided between the discharge tube 1 and the first total reflection mirror 2. A polarizing beam splitter 5 is provided between the discharge tube 1 and the second total reflection mirror 3. The polarizing beam splitter 81' separates propagation directions of light beams having different polarizing components at different ratio. For example, the it reflects 30% and transmit 70% of P component and totally transmit S component. However, these ratios can be changed. The polarizing beam splitter 5 separates propagation direction of light beams of different polarizing directions. For example it reflects S component and transmit P component. A quarter-wave plate 4 and a third total reflection mirror are provided in the light path separated at the polarizing beam splitter 81', i.e., the light path other than the light path of the resonator for maintaining oscillation. A fabry-Perot etalon 6 is provided between the polarizing beam splitter 81' and the total reflection mirror 2 in the light path of the resonator.

Hereinbelow will be described operation of the tenth embodiment.

The polarizing beam splitter 81' transmits amplified P polarizing beam 94 incident thereto partially. The transmitted P polarizing light beam 89 enters the quarter-wave plate 4 where P polarizing component is converted into S polarizing component by twice passing therethrough via the third total mirror 88. The polarizing beam splitter 81' transmits a portion of the light beam 90 (a light beam 91) because the light beam 90 is a S polarizing beam. Some portion of S component is reflected at the polarizing beam splitter 81'. The discharge tube 1 amplifies the light beam 91 to output a light beam 92. The polarizing beam splitter 5 reflects the light beam 92 because the light beam 92 is S polarized. On the other hand, P component partially reflected by the polarizing beam splitter 81' is transmitted through a Fabry-Perot etalon 6 and reflected back by the total reflection mirror 2. A light beam whose wave-length is selected by the Fabry-Perot etalon 6 is reflected by the polarizing beam splitter 81' again and amplified by the discharge tube 1. This P component is transmitted through the polarizing beam splitter 5 and is reflected at the second total reflection mirror 3, this component is used for maintaining oscillation.

Herein below will be described a further embodiment not according to the invention with referring to Fig. 12.

Fig. 12 is a front view of the embodiment of a narrow-band laser apparatus. In Fig. 12, an optical resonator comprises total reflection mirrors 2 and 3 and a discharge tube 1 is provided in the light path of the optical resonator between the total reflection mirrors 2 and 3 which includes a mixed gas of noble and halogen gases as a laser medium. When the discharge tube 1 is excited, a laser beam of ultraviolet is generated there. In a light path of the resonator a polarizing beam splitter 81 is provided between the discharge tube 1 and the first total reflection mirror 2. An wollaston prism 111 as a polarizing beam splitting element is provided between the discharge tube 1 and the second total reflection mirror 3. The polarizing beam splitter 81 separates propagation directions of light beams having different polarizing components. However, a portion of one polarizing component is reflected at the polarizing beam splitter 81 and other portion is transmitted through the polarizing beam splitter. The wollaston prism separates propagation direction of light beams of different polarizing directions by bending the light paths of P and S components in different directions, as shown. A Fabry-Perot etalon 6 is provided between the polarizing beam splitter 81 and the first total reflection mirror 2 as an wavelength selection element. A quarter-wave plate 4 and a third total reflection mirror are provided in the light path separated at the polarizing beam splitter 81, i.e., the light path other than the light path of the resonator for maintaining oscillation.

Hereinbelow will be described operation of the embodiment not according to the invention.

The polarizing beam splitter 81 transmits amplified P polarizing beam 14 incident thereto partially. The transmitted P polarizing light beam 89 enters the Fabry-Perot etalon 6 as an wavelength selection element, which selects only a given wavelength component from the light beam 89. Then the light beam transmitted through the Fabry-Perot etalon 6 is reflected at the first total mirror 2. The polarizing beam splitter 81 transmits a portion of the light beam 90 (a light beam 91) because the light beam 90 is a P polarizing beam. The discharge tube 1 amplifies the light beam 91 to output a light beam 92. The wollaston prism 111 transmits and bends the light beam 92 in one direction because the light beam 92 is P polarized. The transmitted light beam is reflected at the second total reflection mirror 3 and then is transmitted through the polarizing beam splitter 5 again as a light beam 93 to return the light beam 93 to the discharge tube 1. The light beam 93 is amplified by the discharge tube 1 to produce a light beam 94. A portion of the light beam 94 transmits the polarizing beam splitter 81 as a light beam 89 which maintains oscillation in the similar manner mentioned earlier. Other portion of the light beam 94 is reflected at the polarizing beam splitter 81 as a light beam 95. The light beam 95 is transmitted through the quarter-wave plate 4. The transmitted light beam is reflected at the third total mirror 88 and transmits the quarter-wave plate 4 again where P polarizing beam is converted into S polarizing beam, i.e., a light beam 96. This twice transmitting through the quarter-wave plate 4 is equivalent to one transmitting though a half-wave plate.

It is known that if an optical axis of the quarter-wave plate 4 is set such that its optical angle has an inclination angle of 45° with respect to polarizing plane of the incident light, the P polarized incident light is converted into S polarizing light totally. The polarizing beam splitter 81 reflects 100% of S polarizing light beam 96 to produce S polarizing light beam 97 which is amplified by the discharge tube 1. The amplified S polarizing light beam 98 is transmitted through the Wollaston prism 111 to output S polarizing output light beam 99.

As mentioned above, deformation and deterioration of the Fabry-Perot etalon 6 decreases considerably because an intensity of the output light beam 99 is larger than that of the light beam 89 incident to the Fabry-Perot etalon 6 by the gain of the laser medium, i.e., the output light beam is taken out after amplifying by the discharge tube 1. Deformation and deterioration of the Fabry-Perot etalon 6 in this embodiment decrease further compared with the first embodiment because the light beam 90 whose wavelength is selected is amplified by the discharge tube 1 three times, on the other hand, the light beam 10 in Fig. 1 whose wavelength is selected is amplified twice.

The above-mentioned embodiment is described using Fabry-Perot etalon 6, quarter-wave plate 4, polarizing beam splitters 5, 81 and Wollaston prism 111. However, other elements can be applied to this invention. Hereinbelow will be described other embodiments using such elements.

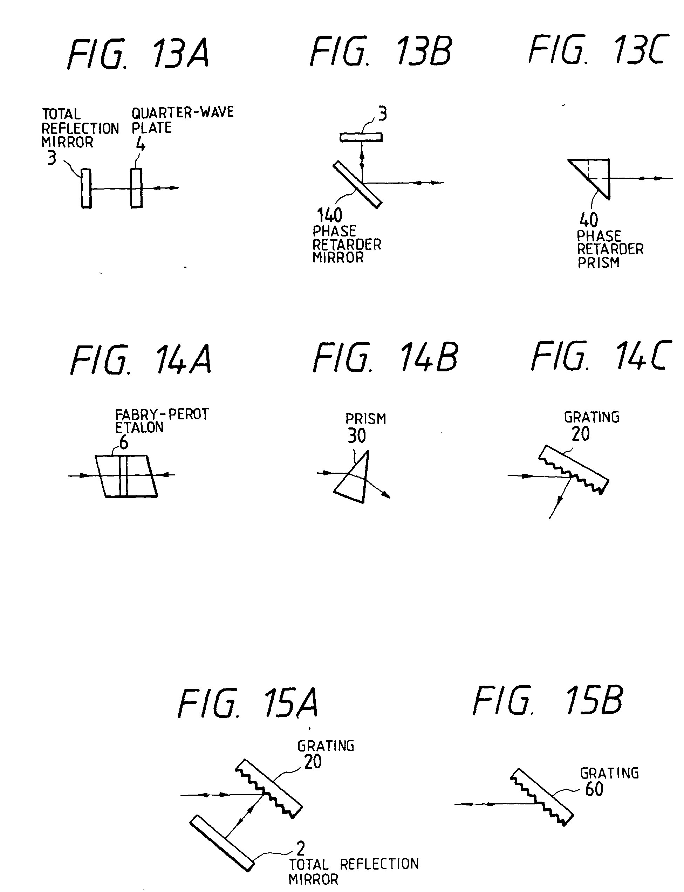

Fig 13A shows an arrangement of the quarter-wave plate 4 and the total reflection mirror 3. Figs. 13B and 13C show equivalent arrangements using equivalent elements to these elements. Combination of a phase retarder mirror 140 with the total reflection mirror 3 acts as the that of the quarter-wave plate 4 with the total reflection mirror 3. One type of phase retarder prism 40 is equivalent to those combination. Therefore, these combination and the element can be replaced with each other.

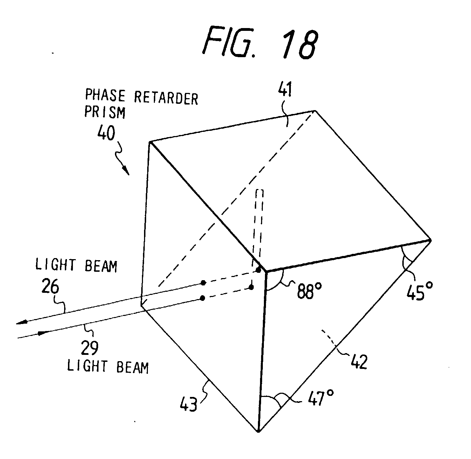

Fig. 18 is a perspective view of the phase retarder prism 40. In Fig. 18, the phase retarder prism 40 is made of high-transmittance material, such as, synthesized quartz and CaF₂. Anti-reflection coat surface (AR coat surface) is formed on a surface 43 where a light beam 29 enters the phase retarder prism 40 and a light beam 26 exits. Further, this surface 43 is inclined by about 2° so that the incident light beam 29 directly reflected at this surface 43 is not mixed with the output light beam 26. Thus, this prism 40 has apex angles 45°, 47°, and 88° unlike the normal type 45° prism. A surface 42 reflects the light beam at a right angle. A dielectric multilayer is formed on the surface 42, which produces P and S polarizing components having 90° phase difference therebetween in accordance with structure and thickness of dielectric layers and is optically equivalent to the quarter-wave plate 4. The light beam reflected at the surface 42 is reflected at a total reflection surface 41 at aright angle and outputted (light beam 26) in the opposite direction. The total reflection mirror surface 41 can be formed easily by a dielectric multilayer.

As mentioned above, the phase retarder prism 40 functions as the quarter-wave plate 4 and the second total reflection mirror 88 and thus, it makes the structure of the apparatus simple and adjustment easy.

Fig 14A shows the Fabry-Perot etalon 6. Figs. 14B and 14C show equivalent elements to these elements. A prism 30 can select a given wavelength component from incident light thereto. A grating 20 also can select a given wavelength component from incident light thereto. Therefore, these elements can be replaced with each other.

Fig 15A shows an arrangement of the grating 20 and the total reflection mirror 2. Fig. 15B shows an element equivalent to that arrangement. The Littrow type grating or echelle grating 60 can separate a given wavelength component and reflect in the direction opposite to incident light thereto. Therefore, these combination and the element can be replaced with each other.

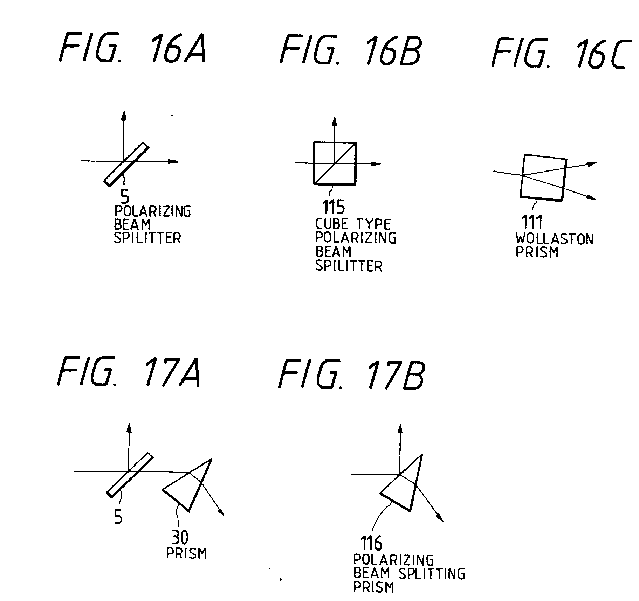

Fig 16A shows the polarizing beam splitter 5. Figs. 16B and 16C show elements equivalent to the polarizing beam splitter 5. A cube type polarizing beam splitter can separate incident light into two polarizing components. The Wollaston prism 111 also can separate incident light into two polarizing components. Therefore, these elements can be replaced with each other.

Fig 17A shows an arrangement of the polarizing beam splitter 5 and the prism 30. Fig. 17B shows an element equivalent to that arrangement. A polarizing beam splitting prism 116 can separate two polarizing components and can separate a given wavelength component from light transmitted there through. The reflective surface thereof comprises dielectric multilayer. Therefore, these combination and the element can be replaced with each other.

In the above-mentioned embodiments of laser apparatus, lasing oscillation is performed with P polarizing component, and then P polarizing component is converted into S component which is amplified to output laser beam. In contrast with this, it is possible that lasing oscillation is performed by S polarizing component, and then S polarizing component is converted into P component which is amplified to output laser beam. Therefore, it is possible to select either polarizing components for oscillation or amplifying in order to make easier carrying out above-mentioned embodiments.

As mentioned above, there are various types of polarizing conversion element for producing polarizing components such as Fresnel rhomboid prism, thee-time total reflection ultra-achromatic quarter-wave plate, etc. In order to obtain a large-diameter beam for exposure, a first-order or multiple-order quarter-wave plate using a crystal quartz plate is suitable. Moreover, it is not necessary that a quarter-wavelength plate is not accurate. In other words, a phase plate capable of changing the ratio between polarized components S and P can be used.

Further, a multilayer cube polarizing element, a transparent plate of Brewster's angle, a Wollaston prism, etc., can be used as the polarizing beam splitter mentioned above. In order to obtain large diameter beam for exposure, a polarization beam split mirror is excellent.

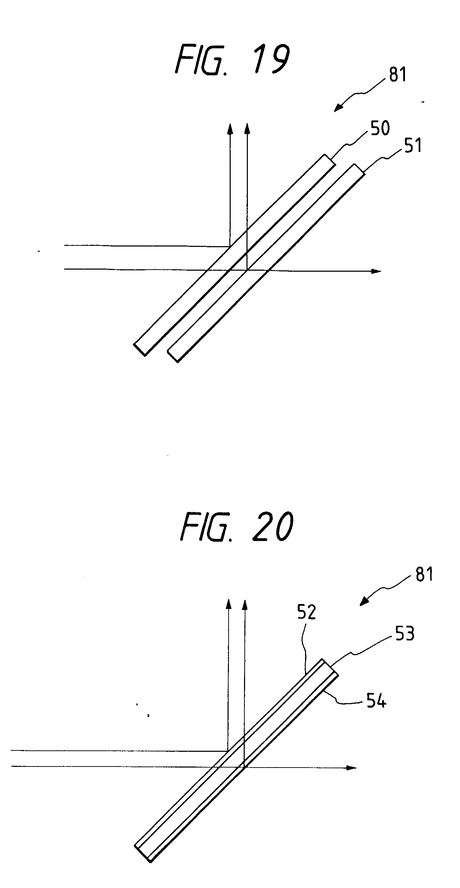

Fig. 19 is a front view of the polarizing beam splitter 81, for example. It comprise a combination of a perfect polarizing beam splitter 50 with a half mirror 51 for the same function as that of the polarizing beam splitter 81. As shown in Fig. 20, the polarizing beam splitter 81 may also comprise a polarizing beam splitting film 52 made of dielectric layer formed on a plate 53 of quartz or CaF₂ whose other surface is covered with semi-transparent film 54.

Further, a multilayer cube polarizing element, a transparent plate of Brewster's angle, a Wollaston prism, etc., can be used as the polarizing beam splitter mentioned above. In order to obtain large diameter beam for exposure, a dielectric multilayer polarization beam splitter is excellent.

Moreover, in the above-mentioned embodiments, the wavelength selection element is provided between the polarization beam splitter and the total mirror 2. However, the wavelength selection element can be provided to other position except the light path from the laser medium to the polarization beam splitter via which the output light outputted externally where the output laser beam is the most powerful light beam.

Plural Fabry-Perot etalons 6, gratings 20, or prisms 30 used in the above-mentioned embodiments can be used as an wavelength selection element or combination between the above-mentioned elements may be used. Moreover, an element combing of an wavelength selection element with a total reflection mirror, such as echelle grating or echelon grating for utilizing wavelength selection function of gratings. In the prism used in above-mentioned embodiment, a total reflection mirror may be formed on one surface thereof. Further, the number of elements can be reduced by combing function of the quarter-wave plate with that of the total reflection mirror 2, i.e., a total reflection surface is formed on one surface of a plate of MgF₂ or quartz phase plate. In other words, the number of elements can be reduced by using an element combining function between these elements for the above-mentioned wavelength selection element, a total reflection mirror, a quarter-wave plate, polarizing beam splitter, etc.

It is not necessary that the total reflection mirrors used in the above-mentioned embodiment have 100% reflectance but it may be a reflectance which maintains optical resonating.

As mentioned above, according to this invention, a portion polarized light beam is taken out by polarizing beam splitter from one polarized light beam; the beam taken out is subjected to polarizing direction conversion by a polarizing conversion element and then it is amplified by the laser medium; and then amplified beam is outputted by a polarizing beam splitter. Therefore, light energy transmitted through the wavelength selection element is reduced by an inverse number of the gain of the laser medium, so that deformation or deterioration of the wavelength selection element is reduced. As a result, a narrow-band laser apparatus suitable for an exposure light source for photolithography is provided without variation of selection wavelength or decrease in output power.

A laser apparatus comprises an optical resonator including first and second mirrors, and laser medium. An wavelength selection element is provided in the resonator for narrowing band-width. A polarizing conversion element for changing ratio of S to P components and polarizing beam splitter are provided for amplifying laser beam to output after wavelength selection and for reducing light load of the wavelength selection element. The polarizing conversion element is provided in the resonator light path. In another embodiment, the polarizing conversion element is provided in a branch light path formed by a second polarizing conversion element and a third mirror, where the second polarizing conversion element reflects and transmits P component at a given ratio and reflects S component. The wavelength selection element comprises a Fabry-Perot etalon, grating, or prism. The polarizing conversion element comprises a quarter-wave plate or a phase retarder mirror. The polarizing beam splitting element comprises a polarizing beam splitter or polarizing beam splitting prism. Such laser apparatus is suited for an exposure light source for photolithography.

## Claims

1. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to reflect said second polarized component (9) toward said first reflecting means (2) and to transmit said first polarized component (7) as output light,
a selection means (6; 20; 30) provided between said first reflecting means (2) and said polarizing beam splitting means (5; 111; 115) in said light path for selecting a given wavelength component from said light, and
a polarizing conversion means (4; 140) provided between said polarizing beam splitting means (5; 111; 115; 116) and said second reflecting means (3) in said light path for producing said first polarized component and said second polarized component in response to said light.

2. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to transmit said second polarized component (9) toward said first reflecting means (2) and to reflect said first polarized component (7) as output light,
a selection means (6; 20; 30) provided between said second reflecting means (3) and said laser medium in said light path for selecting a given wavelength component from said light, and
a polarizing conversion means (4; 140) provided between said selection means (6; 20; 30) and said second reflecting means (3) in said light path for producing said first polarized component and said second polarized component in response to said light.

3. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to transmit said second polarized component (9) toward said first reflecting means (2) and to reflect said first polarized component (7) as output light,
a selection means (6; 20; 30) provided between said second reflecting means (3) and said laser medium in said light path for selecting a given wavelength component from said light, and
a polarizing conversion means (4; 140) provided between said selection means (6; 20; 30) and said laser medium in said light path for producing said first polarized component and said second polarized component in response to said light.

4. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to reflect said second polarized component (9) toward said first reflecting means (2) and to transmit said first polarized component (7) as output light,
a selection means (6; 20; 30) provided between said second reflecting means (3) and said laser medium in said light path for selecting a given wavelength component from said light, and
a polarizing conversion means (4; 140) provided between said selection means (6; 20; 30) and said second reflecting means (3) in said light path for producing said first polarized component and said second polarized component in response to said light.

5. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (111) provided between said first reflecting means (2) and said laser medium in said light path for bending and transmitting a first polarized component (7) as an output light and for bending and transmitting a second polarized component (9) toward said first reflecting means (2),
a selection means (6; 20; 30) provided between said second reflecting means (3) and said laser medium in said light path for selecting a given wavelength component from said light, and
a polarizing conversion means (4; 140) provided between said selection means (6; 20; 30) and said second reflecting means (3) in said light path for producing said first polarized component and said second polarized component in response to said light.

6. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to transmit said second polarized component (9) toward said first reflecting means (2) and to reflect said first polarized component (7) as output light,
a selection means (6; 20; 30) provided between said first reflecting means (2) and said polarizing beam splitting means (5; 111; 115) in said light path for selecting a given wavelength component from said light, and
a polarizing conversion means (4; 140) provided between said polarizing beam splitting means (5; 111; 115; 116) and said laser medium in said light path for producing said first polarized component and said second polarized component in response to said light.

7. A narrow-band laser apparatus comprising
an optical resonator including first reflecting means (2) and second reflecting means (3),
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to reflect said second polarized component (9) toward said first reflecting means (2) and to transmit said first polarized component (7) as output light,
a selection means (6; 20; 30) provided between said first reflecting means (2) and said polarizing beam splitting means (5; 111; 115) in said light path for selecting a given wavelength component from said light, and
a polarizing conversion means (4; 140) provided between said polarizing beam splitting means (5; 111; 115; 116) and said laser medium in said light path for producing said first polarized component and said second polarized component in response to said light.

8. A narrow-band laser apparatus comprising
an optical resonator including first reflecting means (2) and second reflecting means (3),
a laser medium provided in a light path of said optical resonator for remitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to transmit said second polarized component (9) toward said first reflecting means (2) and to reflect said first polarized component (7) as output light,
a selection means (6; 20; 30) provided between said second reflecting means (3) and said laser medium in said light path for selecting a given wavelength component from said light, and
a polarizing conversion means (4; 140) provided between said polarizing beam splitting means (5; 111; 115; 116) and said laser medium in said light path for producing said first polarized component and said second polarized component in response to said light.

9. A narrow-band laser apparatus comprising
an optical resonator including an echelle or echelon grating (60) and second reflecting means (3),
a laser medium provided in a light path of said optical resonator for emitting light, said laser medium including an exciting means,
a polarizing beam splitting means (5; 111; 115; 116) provided between said echelle or echelon grating (60) and said laser medium in said light path for splitting said light into a first polarized component (7) as an output light and a second polarized component (9), said polarizing beam splitting means (5) being arranged so as to reflect said second polarized component (9) toward said echelle or echelon grating (60) and to transmit said first polarized component (7) as output light,
said echelle or echelon grating (60) selecting a given wavelength component from said light, and
a polarizing conversion means (4; 140) provided between said polarizing beam splitting means (5; 111; 115; 116) and said second reflecting means (3) in said light path for producing said first polarized component and said second polarized component in response to said light.

10. A narrow-band laser apparatus comprising
an optical resonator including echelle or echelon grating (60) and second reflecting means (3),
a laser medium provided in a light path of said optical resonator for emitting light, said laser medium including an exciting means,
a polarizing beam splitting means (5; 111; 115; 116) provided between said echelle or echelon grating (60) and said laser medium in said light path for splitting said light into a first polarized component (7) as an output light and a second polarized component (9), said polarizing beam splitting means (5) being arranged so as to reflect said second polarized component (9) toward said echelle or echelon grating (60) and to transmit said first polarized component (7) as output light,
said echelle or echelon grating (60) selecting a given wavelength component from said light, and
a polarizing conversion means (4; 140) provided between said polarizing beam splitting means (5; 111; 115; 116) and said laser medium in said light path for producing said first polarized component and said second polarized component in response to said light.

11. A narrow-band laser apparatus comprising
an optical resonator including first reflecting means (2) and a phase retarder prism (40) whose one surface is covered with a reflection layer,
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to reflect said second polarized component (9) toward said first reflecting means (2) and to transmit said first polarized component (7) as output light,
a selection means (6; 20; 30) provided between said first reflecting means (2) and said polarizing beam splitting means (5; 111; 115) in said light path for selecting a given wavelength component from said light, and
said phase retarder prism (40) producing said first polarized component and said second polarized component in response to said light.

12. A narrow-band laser apparatus comprising
an optical resonator including first reflecting means (2) and a phase retarder prism (40) whose one surface is covered with a reflection layer,
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to transmit said second polarized component (9) toward said first reflecting means (2) and to reflect said first polarized component (7) as output light,
a selection means (6; 20; 30) provided between said phase retarder prism (40) and said laser medium in said light path for selecting a given wavelength component from said light, and
said phase retarder prism (40) producing said first polarized component and said second polarized component in response to said light.

13. A narrow-band laser apparatus comprising
an optical resonator including first reflecting means (2) and a phase retarder prism (40) whose one surface is covered with a reflection layer,
a laser medium provided in a light path of said optical resonator for emitting light, said laser medium including an exciting means,
a polarizing beam splitting means (5; 111; 115; 116) provided between said first reflecting means (2) and said laser medium in said light path for splitting said light into a first polarized component (7) as an output light and a second polarized component (9), said polarizing beam splitting means (5) being arranged so as to reflect said second polarized component (9) toward said first reflecting means (2) and to transmit said first polarized component (7) as output light,
a selection means (6; 20; 30) provided between said phase retarder prism (40) and said laser medium in said light path for selecting a given wavelength component from said light, and
said phase retarder prism (40) producing said first polarized component and said second polarized component in response to said light.

14. A narrow-band laser apparatus comprising
an optical resonator including first reflecting means (2) and a phase retarder prism (40) whose one surface is covered with a reflection layer,
a laser medium provided in a light path of said optical resonator for emitting light, said laser medium including an exciting means,
a polarizing beam splitting means (111) provided between said first reflecting means (2) and said laser medium in said light path for bending and transmitting a first polarized component (7) as an output light and for bending and transmitting a second polarized component (9) toward said first reflecting means (2),
a selection means (6; 20; 30) provided between said phase retarder prism (40) and said laser medium in said light path for selecting a given wavelength component from said light, and
said phase retarder prism (40) producing said first polarized component and said second polarized component in response to said light.

15. A narrow-band laser apparatus comprising
an optical resonator including first and second reflecting means (2, 3),
a laser medium provided in a light path of said optical resonator for emitting light, said laser medium including an exciting means,
a first polarizing beam splitting means (81) provided between said first reflecting means (2) and said laser medium for transmitting a first polarized component (89) partially and reflecting a second polarized component (95),
selection means (6; 20; 30) provided between said first reflecting means (2) and said first polarizing beam splitting means for selecting a given wavelength component from said first polarizing component (89),
a third reflecting means (88) for reflecting back a light ray from said first polarizing beam splitting means,
a polarizing conversion means (4; 40) provided between said first polarizing beam splitting means and said third reflecting means in said light path for converting said first polarized component into said second polarized component in response to said light, and
a second polarizing beam splitting means (5) provided between said laser medium and said second reflecting means (3) for transmitting a first polarized component (99) as output light and for reflecting a second polarized component (98) toward said second reflecting means (3).

16. A narrow-band laser apparatus comprising
an optical resonator including first and second reflecting means (2, 3),
a laser medium provided in a light path of said optical resonator for emitting light, said laser medium including an exciting means,
a first polarizing beam splitting means (81) provided between said first reflecting means (2) and said laser medium for reflecting a first polarized component (95) partially and transmitting a second polarized component (89),
selection means (6; 20; 30) provided between said first reflecting means (2) and said first polarizing beam splitting means for selecting a given wavelength component from said first polarized component (95),
a third reflecting means (88) for reflecting back a light ray from said first polarizing beam splitting means,
a polarizing conversion means (4; 40) provided between said first polarized beam splitting means and said third reflecting means in said light path for converting said first polarized component into said second polarized component in response to said light, and
a second polarizing beam splitting means (5) provided between said laser medium and said second reflecting means (3) for splitting said light into a first polarized component and a second polarized component.

17. A narrow-band laser apparatus comprising
an optical resonator including an echelle or echelon grating (60) and a second reflecting means (3),
a laser medium provided in a light path of said optical resonator for emitting light, said laser medium including an exciting means,
a first polarizing beam splitting means (81) provided between said echelle or echelon grating (60) and said laser medium for transmitting a first polarized component (89) partially and reflecting a second polarized component (95),
said echelle or echelon grating selecting a given wavelength component from said light,
a third reflecting means (88) for reflecting back a light ray from said first polarizing beam splitting means,
a polarizing conversion means (4; 40) provided between said first polarizing beam splitting means and said third reflecting means in said light path for converting said first polarized component into said second polarized component in response to said light, and
a second polarizing beam splitting means (5) provided between said laser medium and said second reflecting means (3) for transmitting a first polarized component (99) as output light and for reflecting a second polarized component (98) toward said second reflecting means (3).

18. A narrow-band laser apparatus comprising
an optical resonator including an echelle or echelon grating (60) and a second reflecting means (3),
a laser medium provided in a light path of said optical resonator for emitting light, said laser medium including an exciting means,
a first polarizing beam splitting means (81) provided between said echelle or echelon grating (60) and said laser medium for reflecting a first polarized component (95) partially and transmitting a second polarized component (89),
said echelle or echelon grating selecting a given wavelength component from said light,
a third reflecting means (88) for reflecting back a light ray from said first polarizing beam splitting means,
a polarizing conversion means (4; 40) provided between said first polarizing beam splitting means and said third reflecting means in said light path for converting said first polarized component into said second polarized component in response to said light, and
a second polarizing beam splitting means (5) provided between said laser medium and said second reflecting means (3) for splitting said light into a first polarized component and a second polarized component (99).

19. A narrow-band laser apparatus comprising
an optical resonator including first and second reflecting means (2, 3),
a laser medium provided in a light path of said optical resonator for emitting light, said laser medium including an exciting means,
a first polarizing beam splitting means (81) provided between said first reflecting means (2) and said laser medium for transmitting a first polarized component (89) partially and reflecting a second polarized component (95),
selection means (6; 20; 30) provided between said first reflecting means (2) and said first polarizing beam splitting means for selecting a given wavelength component from said first polarized component (89),
a phase retarder prism (40) whose one surface is covered with a reflection layer for reflecting back a light ray from said first polarizing beam splitting means, and for converting said first polarized component into said second polarized component in response to said light, and
a second polarizing beam splitting means (5) provided between said laser medium and said second reflecting means (3) for transmitting a first polarized component (99) as output light and for reflecting a second polarized component (98) toward said second reflecting means (3).

20. A narrow-band laser apparatus comprising
an optical resonator including first and second reflecting means (2, 3),
a laser medium provided in a light path of said optical resonator for remitting light, said laser medium including an exciting means,
a first polarizing beam splitting means (81) provided between said first reflecting means (2), and said laser medium for reflecting a first polarized component (95) partially and transmitting a second polarized component (89),
selection means (6; 20; 30) provided between said first reflecting means (2) and said first polarizing beam splitting means for selecting a given wavelength component from said first polarized component (95),
a phase retarder prism (40) whose one surface is covered with a reflection layer for reflecting back a light ray from said first polarizing beam splitting means, and for converting said first polarized component into said second polarized component in response to said light, and
a second polarizing beam splitting means (5) provided between said laser medium and said second reflecting means (3) for splitting said light into a first polarized component and a second polarized component.

21. A narrow-band laser apparatus according to any of claims 1 to 14, **characterized in that** said polarizing beam splitting means comprises a Wollaston prism.

22. A narrow-band laser apparatus according to any of claims 1 to 8 or 11 to 16, 19 or 20, **characterized in that** said selection means comprises a Fabry-Perot etalon (6).

23. A narrow-band laser apparatus according to any of claims 1 to 8 or 11 to 16, 19 or 20, **characterized in that** said selection means comprises a grating (20).

24. A narrow-band laser apparatus according to any of claims 1 to 8 or 11 to 16, 19 or 20, **characterized in that** said selection means comprises a prism (30).

25. A narrow-band laser apparatus according to any of claims 1 to 14, **characterized in that** said polarized beam splitting means comprises a cube type of polarizing beam splitter (115).

26. A narrow-band laser apparatus according to any of claims 1 to 14, **characterized in that** said polarizing beam splitting means comprises a polarizing beam splitting prism (116), a dielectric multilayer being formed on said polarizing beam splitting prism (116).

27. A narrow-band laser apparatus according to any of the preceding claims, **characterized in that** said laser medium comprises an excimer including noble and halogen gas.

28. A narrow-band laser apparatus according to any of claims 1 to 10 or 15 to 18, **characterized in that** said polarizing conversion means (4) comprises a quartz plate.

29. A narrow-band laser apparatus according to any of claims 1 to 10 or 15 to 18, **characterized in that** said polarizing conversion means comprises a phase retarder mirror (40).

30. A narrow-band laser apparatus according to any of claims 15 to 20, **characterized in that** said first polarizing beam splitting means (81) comprises a polarizing beam splitter and a half mirror.

## Patentansprüche

1. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationstrahlteileinrichtung (5) so angeordnet ist, daß sie die zweite polarisierte Komponente (9) zur ersten Reflexionseinrichtung (2) reflektiert und die erste polarisierte Komponente (7) als Ausgangslicht überträgt,
einer Auswahleinrichtung (6; 20; 30), die zwischen der ersten Reflexionseinrichtung (2) und der Polarisationsstrahlteileinrichtung (5; 111; 115) in der Lichtbahn vorgesehen ist, um eine vorgegebene Wellenlängenkomponente von dem Licht auszuwählen, und
einer Polarisationsumwandlungseinrichtung (4; 140), die zwischen der Polarisationsstrahlteileinrichtung (5; 111; 115; 116) und der zweiten Reflexionseinrichtung (3) in der Lichtbahn vorgesehen ist, um die erste polarisierte Komponente und die zweite polarisierte Komponente ansprechend auf das Licht zu erzeugen.

2. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite Polarisationkomponente (9) zur ersten Reflexionseinrichtung (2) zu übertragen und die erste polarisierte Komponente (7) als ein Ausgangslicht zu reflektieren,
einer Auswahleinrichtung (6; 20; 30), die zwischen der zweiten Reflexionseinrichtung (3) und dem Lasermedium in der Lichtbahn vorgesehen ist, um einen vorbestimmte Wellenlängenkomponente von dem Licht auszuwählen, und
einer Polarisationsumwandlungseinrichtung (4; 140), die zwischen der Auswahleinrichtung (6; 20; 30) und der zweiten Reflexionseinrichtung (3) in der Lichtbahn vorgesehen ist, um die erste polarisierte Komponente und die zweite polarisierte Komponente ansprechend auf das Licht zu erzeugen.

3. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zu der ersten Reflexionseinrichtung (2) zu übertragen und die erste polarisierte Komponente (7) als Ausgangslicht zu reflektieren,
einer Auswahleinrichtung (6; 20; 30), die zwischen der zweiten Reflexionseinrichtung (3) und dem Lasermedium in der Lichtbahn vorgesehen ist, um eine vorbestimmte Wellenlängenkomponente von dem Licht auszuwählen, und
einer Polarisationsumwandlungseinrichtung (4; 140), die zwischen der Auswahleinrichtung (6; 20; 30) und dem Lasermedium in der Lichtbahn vorgesehen ist, um die erste polarisierte Komponente und die zweite polarisierte Komponente ansprechend auf das Licht zu erzeugen.

4. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zur ersten Reflexionseinrichtung (2) zu reflektieren und die erste polarisierte Komponente (7) als Ausgangslicht zu übertragen,
einer Auswahleinrichtung (6; 20; 30), die zwischen der zweiten Reflexionseinrichtung (3) und dem Lasermedium in der Lichtbahn vorgesehen ist, um eine vorbestimmte Wellenlängenkomponente von dem Licht auszuwählen, und
einer Polarisationsumwandlungseinrichtung (4; 140), die zwischen der Auswahleinrichtung (6; 20; 30) und der zweiten Reflexionseinrichtung (3) in der Lichtbahn vorgesehen ist, um die erste polarisierte Komponente und die zweite polarisierte Komponente ansprechend auf das Licht zu erzeugen.

5. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (111) die zwischen der ersten Reflexionseinrichtung (2) und dem Lasermedium in der Lichtbahn vorgesehen ist, um eine erste polarisierte Komponente (7) als ein Ausgangslicht abzulenken und zu übertragen und eine zweite polarisierte Komponente (9) zu der ersten Reflexionseinrichtung (2) abzulenken und zu übertragen,
einer Auswahleinrichtung (6; 20; 30), die zwischen der zweiten Reflexionseinrichtung (3) und dem Lasermedium in der Lichtbahn vorgesehen ist, um eine vorbestimmte Wellenlängenkomponente von dem Licht auszuwählen, und
einer Polarisationsumwandlungseinrichtung (4; 140), die zwischen der Auswahleinrichtung (6; 20; 30) und der zweiten Reflexionseinrichtung (3) in der Lichtbahn vorgesehen ist, um die erste polarisierte Komponente und die zweite polarisierte Komponente ansprechend auf das Licht zu erzeugen.

6. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei Polarisationsstrahlteileinrichtung (5) dazu angeordnet ist, die zweite polarisierte Komponente (9) zu der ersten Reflexionseinrichtung (2) zu übertragen und die erste polarisierte Komponente (7) als Ausgangslicht zu reflektieren,
einer Auswahleinrichtung (6; 20; 30), die zwischen der ersten Reflexionseinrichtung (2) und der Polarisationsstrahlteileinrichtung (5; 111; 115) in der Lichtbahn vorgesehen ist, um eine vorbestimmte Wellenlängenkomponente von dem Licht auszuwählen, und
einer Polarisationsumwandlungseinrichtung (4; 140), die zwischen der Polarisationsstrahlteileinrichtung (5; 111; 115; 116) und dem Lasermedium in der Lichtbahn vorgesehen ist, um die erste polarisierte Komponente und die zweite polarisierte Komponente ansprechend auf das Licht zu erzeugen.

7. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zu der ersten Reflexionseinrichtung (2) zu reflektieren und die erste polarisierte Komponente (7) als Ausgangslicht zu übertragen,
einer Auswahleinrichtung (6; 20; 30), die zwischen der ersten Reflexionseinrichtung (2) und der Polarisationsstrahlteileinrichtung (5; 111; 115) in der Lichtbahn vorgesehen ist, um eine vorbestimmte Wellenlängenkomponente von dem Licht auszuwählen, und
einer Polarisationsumwandlungseinrichtung (4; 140), die zwischen der Polarisationsstrahlteileinrichtung (5; 111; 115; 116) und dem Lasermedium in der Lichtbahn vorgesehen ist, um die erste polarisierte Komponenten und die zweite polarisierte Komponente ansprechend auf das Licht zu erzeugen.

8. Schmalband-Laservorrichtung mit
einem optischen Resonator, der eine erste Reflexionseinrichtung (2) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweiten polarisierte Komponente (9) zur ersten Reflexionseinrichtung (2) zu übertragen und die erste polarisierte Komponente (7) als Ausgangslicht zu reflektieren,
einer Auswahleinrichtung (6; 20; 30), die zwischen der zweiten Reflexionseinrichtung (3) und dem Lasermedium in der Lichtbahn vorgesehen ist, um eine vorbestimmte Wellenlängenkomponente von dem Licht auszuwählen, und
einer Polarisationsumwandlungseinrichtung (4; 140), die zwischen der Polarisationsstrahlteileinrichtung (5; 111; 115; 116) und dem Lasermedium in der Lichtbahn vorgesehen ist, um die erste polarisierte Komponente und die zweite polarisierte Komponente ansprechend auf das Licht zu erzeugen.

9. Schmalband-Laservorrichtung mit
einem optischen Resonator, das ein Echelle- oder Echelongitter (60) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen dem Echelle- oder Echelongitter (60) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zu dem Echelle- oder Echelongitter (60) zu reflektieren und die erste polarisierte Komponente (7) als Ausgangslicht zu übertragen,
wobei das Echelle- oder das Echelongitter (60) eine vorbestimmte Wellenlängenkomponente von dem Licht auswählt, und
einer Polarisationsumwandlungseinrichtung (4; 140), die zwischen der Polarisationsstrahlteileinrichtung (5; 111; 115; 116) und der zweiten Reflexionseinrichtung (3) in der Lichtbahn vorgesehen ist, um die erste polarisierte Komponente und die zweite polarisierte Komponente ansprechend auf das Licht zu erzeugen.

10. Schmalband-Laservorrichtung mit
einem optischen Resonator, der ein Echelle- oder Echelongitter (60) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen dem Echelle- oder Echelongitter (60) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zu dem Echelle- oder Echelongitter (60) zu reflektieren und die erste polarisierte Komponente (7) als Ausgangslicht zu übertragen,
wobei das Echelle- oder Echelongitter (60) eine vorbestimmte Wellenlängenkomponente von dem Licht auswählt, und
einer Polarisationsumwandlungseinrichtung (4; 140), die zwischen der Polarisationsstrahlteileinrichtung (5; 111; 115; 116) und dem Lasermedium in der Lichtbahn vorgesehen ist, um die erste polarisierte Komponente und die zweite polarisierte Komponente ansprechend auf das Licht zu erzeugen.

11. Schmalband-Laservorrichtung mit
einem optischen Resonator, der eine erste Reflexionseinrichtung (2) und ein Phasenverzögerungsprisma (40) umfaßt, dessen eine Fläche mit einer Reflexionsschicht bedeckt ist,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zur ersten Reflexionseinrichtung (2) zu reflektieren und die erste polarisierte Komponente (7) als Ausgangslicht zu übertragen,
eine Auswahleinrichtung (6; 20; 30), die zwischen der ersten Reflexionseinrichtung (2) und der Polarisationsstrahlteileinrichtung (5; 111; 115) in der Lichtbahn vorgesehen ist, um eine vorbestimmte Wellenlängenkomponente von dem Licht auszuwählen, und
wobei das Phasenverzögerungsprisma (40) die erste polarisierte Komponente und die zweite polarisierte Komponente ansprechend auf das Licht erzeugt.

12. Schmalband-Laservorrichtung mit
einem optischen Resonator, der eine erste Reflexionseinrichtung (2) und ein Phasenverzögerungsprisma (40) umfaßt, dessen eine Fläche mit einer Reflexionsschicht bedeckt ist,
einem Lasermedium, das in der Lichtbahn des optischen Resonators zum Aussenden von Licht vorgesehen, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite Polarisationskomponente (9) zur ersten Reflexionseinrichtung (2) zu übertragen und die erste polarisierte Komponente (7) als Ausgangslicht zu reflektieren,
einer Auswahleinrichtung (6; 20; 30), die zwischen dem Phasenverzögerungsprisma (40) und dem Lasermedium in der Lichtbahn vorgesehen ist, um eine vorbestimmte Wellenlängenkomponente von dem Licht auszuwählen, und
wobei das Phasenverzögerungsprisma (40) die erste polarisierte Komponente und die zweite polarisierte Komponente ansprechend auf das Licht erzeugt.

13. Schmalband-Laservorrichtung mit
einem optischen Resonator, der eine erste Reflexionseinrichtung (2) und ein Phasenverzögerungsprisma (40) umfaßt, dessen eine Fläche mit einer Reflexionsschicht bedeckt ist,
einem Lasermedium, das in einer Lichtbahn des optischen Resonators zum Aussenden vorgesehen ist, wobei das Lasermedium eine Anregungseinrichtung umfaßt,
einer Polarisationsstrahlteileinrichtung (5; 111; 115; 116), die zwischen der ersten Reflexionseinrichtung (2) und dem Lasermedium in der Lichtbahn vorgesehen ist, um das Licht in eine erste polarisierte Komponente (7) als ein Ausgangslicht und eine zweite polarisierte Komponente (9) aufzuteilen, wobei die Polarisationsstrahlteileinrichtung (5) dazu angeordnet ist, die zweite polarisierte Komponente (9) zur ersten Reflexionseinrichtung (2) zu reflektieren und die erste polarisierte Komponente (7) als Ausgangslicht zu übertragen,
einer Auswahleinrichtung (6; 20; 30), die zwischen dem Phasenverzögerungsprisma (40) und dem Lasermedium in der Lichtbahn angeordnet ist, um eine vorbestimmte Wellenlängenkomponente von dem Licht auszuwählen, und
wobei das Phasenverzögerungsprisma (40) die erste polarisierte Komponente und die zweite polarisierte Komponente ansprechend auf das Licht erzeugt.

14. Schmalband-Laservorrichtung mit
einem optischen Resonator, der eine erste Reflexionseinrichtung (2) und ein Phasenverzögerungsprisma (40) umfaßt, dessen eine Fläche mit einer Reflexionsschicht bedeckt ist,
einem Lasermedium, das in einer Lichtbahn des optischen Resonators zum Aussenden von Licht vorgesehen ist, wobei das Lasermedium eine Anregungseinrichtung umfaßt,
einer Polarisationsstrahlteileinrichtung (111), die zwischen der ersten Reflexionseinrichtung (2) und dem Lasermedium in der Lichtbahn vorgesehen ist, um eine erste polarisierte Komponente (7) als ein Ausgangslicht abzulenken und zu übertragen und eine zweite polarisierte Komponente (9) zu der ersten Reflexionseinrichtung (2) abzulenken und zu übertragen,
einer Auswahleinrichtung (6; 20; 30), die zwischen dem Phasenverzögerungsprisma (40) und dem Lasermedium in der Lichtbahn vorgesehen ist, um eine vorbestimmte Wellenlängenkomponente von dem Licht auszuwählen, und
wobei das Phasenverzögerungsprisma (40) die erste polarisierte Komponente und die zweite polarisierte Komponente ansprechend auf das Licht erzeugt.

15. Schmalband-Laservorrichtung mit
einem optischen Resonator, der eine erste und zweite Reflexionseinrichtung (2, 3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen der ersten Reflexionseinrichtung (2) und dem Lasermedium vorgesehen ist, um eine erste polarisierte Komponente (89) teilweise zu übertragen und eine zweite polarisierte Komponente (95) zu reflektieren,
einer Auswahleinrichtung (6; 20; 30), die zwischen der ersten Reflexionseinrichtung (2) und der ersten Polarisationsstrahlteileinrichtung vorgesehen ist, um eine vorbestimmte Wellenlängenkomponente von der ersten Polarisationskomponente (89) auszuwählen,
einer dritten Reflexionseinrichtung (88), um einen Lichtstrahl von der ersten Polarisationsstrahlteileinrichtung zurück zu reflektieren,
einer Polarisationsumwandlungseinrichtung (4; 40), die zwischen der ersten Polarisationsstrahlteileinrichtung und der dritten Reflexionseinrichtung in der Lichtbahn vorgesehen ist, um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um eine erste polarisierte Komponente (99) als ein Ausgangslicht zu übertragen und eine zweite polarisierte Komponente (98) zu der zweiten Reflexionseinrichtung (3) zu reflektieren.

16. Schmalband-Laservorrichtung mit
einem optischen Resonator, der eine erste und zweite Reflexionseinrichtung (2, 3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen der ersten Reflexionseinrichtung (2) und dem Lasermedium vorgesehen ist, um eine erste polarisierte Komponente (95) teilweise und eine zweite polarisierte Komponente (89) zu übertragen,
einer Auswahleinrichtung (6; 20; 30), die zwischen der ersten Reflexionseinrichtung (2) und der ersten Polarisationsstrahlteileinrichtung vorgesehen ist, um eine vorbestimmte Wellenlängenkomponente von der ersten polarisierten Komponente (95) auszuwählen,
einer dritten Reflexionseinrichtung (88), um einen Lichtstrahl von der ersten Polarisationsstrahlteileinrichtung zurück zu reflektieren,
einer Polarisationsumwandlungseinrichtung (4; 40), die zwischen der ersten Polarisationsstrahlteileinrichtung und der dritten Reflexionseinrichtung in der Lichtbahn vorgesehen ist, um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um das Licht in eine erste polarisierte Komponente und in eine zweite polarisierte Komponente aufzuteilen.

17. Schmalband-Laservorrichtung mit
einem optischen Resonator, der ein Echelle- oder Echelongitter (60) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen dem Echelle- oder Echelongitter (60) und dem Lasermedium vorgesehen ist, um eine erste polarisierte Komponente (89) teilweise zu übertragen und eine zweite polarisierte Komponente (95) zu reflektieren,
wobei das Echelle- oder Echelongitter eine vorbestimmte Wellenlängenkomponente von dem Licht auswählt,
einer dritten Reflexionseinrichtung (88), um einen Lichtstrahl von der ersten Polarisationsstrahlteileinrichtung zurück zu reflektieren,
einer Polarisationsumwandlungseinrichtung (4;40), die zwischen der ersten Polarisationsstrahlteileinrichtung und der dritten Reflexionseinrichtung in der Lichtbahn vorgesehen ist, um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um eine erste polarisierte Komponente (99) als Ausgangslicht zu übertragen und eine zweite polarisierte Komponente (98) zu der zweiten Reflexionseinrichtung (3) zu reflektieren.

18. Schmalband-Laservorrichtung mit
einem optischen Resonator, der ein Echelle- oder Echelongitter (60) und eine zweite Reflexionseinrichtung (3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen dem Echelle- oder Echelongitter (60) und dem Lasermedium vorgesehen ist, um eine erste polarisierte Komponente (95) teilweise zu reflektieren und eine zweite polarisierte Komponente (89) zu übertragen,
wobei das Echelle- oder Echelongitter eine vorbestimmte Wellenlängenkomponente von dem Licht auswählt,
einer dritten Reflexionseinrichtung (88), um einen Lichtstrahl von der ersten Polarisationsstrahlteileinrichtung zurück zu reflektieren,
einer Polarisationsumwandlungseinrichtung (4;40), die zwischen der ersten Polarisationsstrahlteileinrichtung und der dritten Reflexionseinrichtung in der Lichtbahn vorgesehen ist, um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um das Licht in eine erste polarisierte Komponente und eine zweite polarisierte Komponente (99) aufzuteilen.

19. Schmalband-Laservorrichtung mit
einem optischen Resonator, der eine erste und zweite Reflexionseinrichtung (2, 3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen der ersten Reflexionseinrichtung (2) und dem Lasermedium vorgesehen ist, um eine erste polarisierte Komponente (89) teilweise zu übertragen und eine zweite polarisierte Komponente (95) zu reflektieren,
einer Auswahleinrichtung (6; 20; 30), die zwischen der ersten Reflexionseinrichtung (2) und der ersten Polarisationsstrahlteileinrichtung vorgesehen ist, um eine vorbestimmte Wellenlängenkomponente von der ersten polarisierten Komponente (89) auszuwählen,
einem Phasenverzögerungsprisma (40), dessen eine Fläche mit einer Reflexionsschicht bedeckt ist, um einen Lichtstrahl von der ersten Polarisationsstrahlteileinrichtung zurück zu reflektieren und um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um eine erste polarisierte Komponente (99) als Ausgangslicht zu übertragen und eine zweite polarisierte Komponente (98) zu der zweiten Reflexionseinrichtung (3) zu reflektieren.

20. Schmalband-Laservorrichtung mit
einem optischen Resonator, der eine erste und zweite Reflexionseinrichtung (2, 3) umfaßt,
einem Lasermedium, das in einer Lichtbahn des optischen Resonators zum Aussenden von Licht vorgesehen ist, wobei das Lasermedium eine Anregungseinrichtung umfaßt,
einer ersten Polarisationsstrahlteileinrichtung (81), die zwischen der ersten Reflexionseinrichtung (2) und dem Lasermedium vorgesehen ist, um eine erste polarisierte Komponente (95) teilweise zu reflektieren und eine zweite polarisierte Komponente (89) zu übertragen,
einer Auswahleinrichtung (6; 20, 30), die zwischen der ersten Reflexionseinrichtung (2) und der ersten Polarisationsstrahlteileinrichtung vorgesehen ist, um eine vorbestimmte Wellenlängenkomponente von der ersten polarisierten Komponente (95) auszuwählen,
einem Phasenverzögerungsprisma (40), dessen eine Fläche mit einer Reflexionsschicht bedeckt ist, um einen Lichtstrahl von der ersten Polarisationsstrahlteileinrichtung zurück zu reflektieren und um die erste polarisierte Komponente in die zweite polarisierte Komponente ansprechend auf das Licht umzuwandeln, und
einer zweiten Polarisationsstrahlteileinrichtung (5), die zwischen dem Lasermedium und der zweiten Reflexionseinrichtung (3) vorgesehen ist, um das Licht in eine erste polarisierte Komponente und eine zweite polarisierte Komponente aufzuteilen.

21. Schmalband-Laservorrichtung nach einem der Ansprüche 1 bis 14, dadurch gekennzeichnet, daß die Polarisationsstrahlteileinrichtung ein Wollaston-Prisma aufweist.

22. Schmalband-Laservorrichtung nach einem der Ansprüche 1 bis 8 oder 11 bis 16, 19 oder 20, dadurch gekennzeichnet, daß die Auswahleinrichtung ein Fabry-Perot-Etalon (6) aufweist.

23. Schmalband-Laservorrichtung nach einem der Ansprüche 1 bis 8 oder 11 bis 16, 19 oder 20, dadurch gekennzeichnet, daß die Auswahleinrichtung ein Gitter (20) aufweist.

24. Schmalband-Laservorrichtung nach einem der Ansprüche 1 bis 8 oder 11 bis 16, 19 oder 20, dadurch gekennzeichnet, daß die Auswahleinrichtung ein Prisma (30) aufweist.

25. Schmalband-Laservorrichtung nach einem der Ansprüche 1 bis 14, dadurch gekennzeichnet, daß die Polarisationsstrahlteileinrichtung einen Polarisationsstrahlteiler (115) in Würfelbauart aufweist.

26. Schmalband-Laservorrichtung nach einem der Ansprüche 1 bis 14, dadurch gekennzeichnet, daß die Polarisationsstrahlteileinrichtung ein Polarisationsstrahlteilprisma (116) aufweist, wobei eine dielektrische Mehrfachschicht auf dem Polarisationsstrahlteilprisma (116) ausgebildet ist.

27. Schmalband-Laservorrichtung nach einem der vorangehenden Ansprüche, dadurch gekennzeichnet, daß das Lasermedium einen Excimer aufweist, der ein Edel- und Halogengas umfaßt.

28. Schmalband-Laservorrichtung nach einem der Ansprüche 1 bis 10 oder 15 bis 18, dadurch gekennzeichnet, daß die Polarisationsumwandlungseinrichtung (4) eine Quarzplatte aufweist.

29. Schmalband-Laservorrichtung nach einem der Ansprüche 1 bis 10 oder 15 bis 18, dadurch gekennzeichnet, daß die Polarisationsumwandlungseinrichtung einen Phasenverzögerungsspiegel (40) aufweist.

30. Schmalband-Laservorrichtung nach einem der Ansprüche 15 bis 20, dadurch gekennzeichnet, daß die Polarisationsstrahlteileinrichtung (81) einen Polarisationsstrahlteiler und einen Halbspiegel aufweist.

## Revendications

1. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser comprenant un moyen d'excitation,
un moyen de séparation de faisceau polarisant (5, 111, 115, 116) prévu entre ledit premier moyen réfléchissant (2) et ledit milieu à effet laser dans ledit trajet lumineux afin de séparer ladite lumière en une première composante polarisée (7) en tant que lumière de sortie et une seconde composante polarisée (9), ledit moyen de séparation polarisant (5) étant agencé de façon à réfléchir ladite seconde composante polarisée (9) en direction dudit premier moyen de réflexion (2) et à transmettre ladite première composante polarisée (7) en tant que lumière de sortie,
un moyen de sélection (6, 20, 30) prévu entre ledit premier moyen de réflexion (2) et ledit moyen de séparation de faisceau polarisant (5, 111, 115) dans ledit trajet lumineux afin de sélectionner une composante de longueur d'onde donnée à partir de ladite lumière, et
un moyen de conversion de polarisation (4, 140) prévu entre ledit moyen de séparation de faisceau polarisant (5, 111, 115, 116) et ledit second moyen de réflexion (3) dans ledit trajet lumineux afin de produire ladite première composante polarisée et ladite seconde composante polarisée en réponse à ladite lumière.

2. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser comprenant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à transmettre ladite seconde composante polarisée (9) en direction dudit premier moyen de réflexion (2) et à réfléchir ladite première composante polarisée (7) en tant que lumière de sortie,
un moyen de sélection (6, 20, 30) prévu entre ledit second moyen de réflexion (3) et ledit milieu à effet laser dans ledit trajet lumineux afin de sélectionner une composante de longueur d'onde donnée à partir de ladite lumière, et
un moyen de conversion de polarisation (4, 140) prévu entre ledit moyen de sélection (6, 20, 30) et ledit second moyen de réflexion (3) dans ledit trajet lumineux afin de produire ladite première composante polarisée et ladite seconde composante polarisée en réponse à ladite lumière.

3. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à transmettre ladite seconde composante polarisée (9) en direction dudit premier moyen de réflexion (2) et à réfléchir ladite première composante polarisée (7) en tant que lumière de sortie,
un moyen de sélection (6, 20, 30) prévu entre ledit second moyen de réflexion (3) et ledit milieu à effet laser dans ledit trajet lumineux afin de sélectionner une composante de longueur d'onde donnée à partir de ladite lumière, et
un moyen de conversion de polarisation (4, 140) prévu entre ledit moyen de sélection (6, 20, 30) et ledit milieu à effet laser dans ledit trajet lumineux afin de produire ladite première composante polarisée et ladite seconde composante polarisée en réponse à ladite lumière.

4. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit premier moyen de réflexion (2) et à transmettre ladite première composante polarisée (7) en tant que lumière de sortie,
un moyen de sélection (6, 20, 30) prévu entre ledit second moyen de réflexion (3) et ledit milieu à effet laser dans ledit trajet lumineux afin de sélectionner une composante de longueur d'onde donnée à partir de ladite lumière, et
un moyen de conversion de polarisation (4, 140) prévu entre ledit moyen de sélection (6, 20, 30) et ledit second moyen de réflexion (3) dans ledit trajet lumineux afin de produire ladite première composante polarisée et ladite seconde composante polarisée en réponse à ladite lumière.

5. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (111) prévu entre ledit premier moyen de réflexion (2) et ledit milieu à effet laser dans ledit trajet lumineux afin d'incurver et de transmettre une première composante polarisée (7) en tant que lumière de sortie et afin d'incurver et de transmettre une seconde composante polarisée (9) en direction dudit premier moyen de réflexion (2),
un moyen de sélection (6, 20, 30) prévu entre ledit second moyen de réflexion (3) et ledit milieu à effet laser dans ledit trajet lumineux afin de sélectionner une composante de longueur d'onde donnée à partir de ladite lumière, et
un moyen de conversion de polarisation (4, 140) prévu entre ledit moyen de sélection (6, 20, 30) et ledit second moyen de réflexion (3) dans ledit trajet lumineux afin de produire ladite première composante polarisée et ladite seconde composante polarisée en réponse à ladite lumière.

6. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à transmettre ladite seconde composante polarisée (9) en direction dudit premier moyen de réflexion (2) et à réfléchir ladite première composante polarisée (7) en tant que lumière de sortie,
un moyen du sélection (6, 20, 30) prévu entre ledit premier moyen de réflexion (2) et ledit moyen de séparation de faisceau polarisant (5, 111, 115) dans ledit trajet lumineux afin de sélectionner une composante de longueur d'onde donnée à partir de ladite lumière, et
un moyen de conversion de polarisation (4, 140) prévu entre ledit moyen de séparation de faisceau polarisant (5, 111, 115, 116) et ledit milieu à effet laser dans ledit trajet lumineux afin de produire ladite première composante polarisée et ladite seconde composante polarisée en réponse à ladite lumière.

7. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit premier moyen de réflexion (2) et à transmettre ladite première composante polarisée (7) en tant que lumière de sortie,
un moyen de sélection (6, 20, 30) prévu entre ledit premier moyen de réflexion (2) et ledit moyen de séparation de faisceau polarisant (5, 111, 115) dans ledit trajet lumineux afin de sélectionner une composante de longueur d'onde donnée à partir de ladite lumière, et
un moyen de conversion de polarisation (4, 140) prévu entre ledit moyen de séparation de faisceau polarisant (5, 111, 115, 116) et ledit milieu à effet laser dans ledit trajet lumineux afin de produire ladite première composante polarisée et ladite seconde composante polarisée un réponse à ladite lumière.

8. Appareil à laser à bande étroite comprenant
un résonateur optique incluant un premier moyen de réflexion (2) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à transmettre ladite seconde composante polarisée (9) en direction dudit premier moyen de réflexion (2) et à réfléchir ladite première composante polarisée (7) en tant que lumière de sortie,
un moyen de sélection (6, 20, 30) prévu entre ledit second moyen de réflexion (3) et ledit milieu à effet laser dans ledit trajet lumineux afin de sélectionner une composante de longueur d'onde donnée à partir de ladite lumière, et
un moyen de conversion de polarisation (4, 140) prévu entre ledit moyen de séparation de faisceau polarisant (5, 111, 115, 116) et ledit milieu à effet laser dans ledit trajet lumineux afin de produire ladite première composante polarisée et ladite seconde composante polarisée en réponse à ladite lumière.

9. Appareil à laser à bande étroite comprenant
un résonateur optique incluant un réseau de diffraction en échelle ou en échelons (60) et un second moyen de réflexion (3),
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit réseau de diffraction en échelle ou en échelons (60) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit réseau de diffraction en échelle ou en échelons (60) et à transmettre ladite première composante polarisée (7) en tant que lumière de sortie,
ledit réseau de diffraction en échelle ou en échelons (60) sélectionnant une composante de longueur d'onde donnée à partir de ladite lumière, et
un moyen de conversion de polarisation (4, 140) prévu entre ledit moyen de séparation de faisceau polarisant (5, 111, 115, 116) et ledit second moyen de réflexion (3) dans ledit trajet lumineux afin de produire ladite première composante polarisée et ladite seconde composante polarisée en réponse à ladite lumière.

10. Appareil à laser à bande étroite comprenant
un résonateur optique incluant un réseau de diffraction en échelle ou en échelons (60) et un second moyen de réflexion (3),
un milieu a effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit réseau de diffraction en échelle ou en échelons (60) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit réseau de diffraction en échelle ou en échelons (60) et à transmettre ladite première composante polarisée (7) en tant que lumière de sortie,
ledit réseau de diffraction en échelle ou en échelons (60) sélectionnant une composante de longueur d'onde donnée à partir de ladite lumière, et
un moyen de conversion de polarisation (4, 140) prévu entre ledit moyen de séparation de faisceau polarisant (5, 111, 115, 116) et ledit milieu à effet laser dans ledit trajet lumineux afin de produire ladite première composante polarisée et ladite seconde composante polarisée en réponse à ladite lumière.

11. Appareil à laser à bande étroite comprenant
un résonateur optique incluant un premier moyen de réflexion (2) et un prisme retardateur de phase (40) dont une première surface est couverte par une couche de réflexion,
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit premier moyen de réflexion (2) et à transmettre ladite première composante polarisée (7) en tant que lumière de sortie,
un moyen de sélection (6, 20, 30) prévu entre ledit premier moyen de réflexion (2) et ledit moyen de séparation de faisceau polarisant (5, 111, 115) dans ledit trajet lumineux afin de sélectionner une composante de longueur d'onde donnée à partir de ladite lumière, et
ledit prisme retardateur de phase (40) produisant ladite première composante polarisée et ladite seconde composante polarisée en réponse à ladite lumière.

12. Appareil à laser à bande étroite comprenant
un résonateur optique incluant un premier moyen de réflexion (2) et un prisme retardateur de phase (40) dont une première surface est couverte d'une couche de réflexion,
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à transmettre ladite seconde composante polarisée (9) en direction dudit premier moyen de réflexion (2) et à réfléchir ladite première composante polarisée (7) en tant que lumière de sortie,
un moyen de sélection (6, 20, 30) prévu entre ledit prisme retardateur de phase (40) et ledit milieu à effet laser dans ledit trajet lumineux afin de sélectionner une composante de longueur d'onde donnée à partir de ladite lumière, et
ledit prisme retardateur de phase (40) produisant ladite première composante polarisée et ladite seconde composante polarisée en réponse à ladite lumière,

13. Appareil à laser à bande étroite comprenant
un résonateur optique incluant un premier moyen de réflexion (2) et un prisme retardateur de phase (40) dont une première surface est recouverte d'une couche de réflexion,
un milieu à effet laser prévu dans le trajet lumineux dudit résonateur optique afin d'émettre de la lumière, ledit milieu à effet laser incluant un moyen d'excitation,
un moyen de séparation de faisceau polarisant (5, 111, 115, 116) prévu entre ledit premier moyen de réflexion (2) et ledit milieu à effet laser dans ledit trajet lumineux afin de séparer ladite lumière en une première composante polarisée (7) en tant que lumière de sortie et une seconde composante polarisée (9), ledit moyen de séparation de faisceau polarisant (5) étant agencé de façon à réfléchir ladite seconde composante polarisée (9) en direction dudit premier moyen de réflexion (2) et à transmettre ladite première composante polarisée (7) en tant que lumière de sortie,
un moyen de sélection (6, 20, 30) prévu entre ledit prisme retardateur de phase (40) et ledit milieu à effet laser dans ledit trajet lumineux afin de sélectionner une composante de longueur d'onde donnée à partir de ladite lumière, et
ledit prisme retardateur de phase (40) produisant ladite première composante polarisée et ladite seconde composante polarisée en réponse à ladite lumière.

14. Appareil à laser à bande étroite comprenant
un résonateur optique incluant un premier moyen de réflexion (2) et un prisme retardateur de phase (40) dont une première surface est couverte d'une couche de réflexion,
un milieu à effet laser prévu dans le trajet lumineux dudit résonateur optique afin d'émettre de la lumière, ledit milieu à effet laser incluant un moyen d'excitation,
un moyen de séparation de faisceau polarisant (111) prévu entre ledit premier moyen de réflexion (2) et ledit milieu à effet laser dans ledit trajet lumineux afin d'incurver et de transmettre une première composante polarisée (7) en tant que lumière de sortie et afin d'incurver et de transmettre une seconde composante polarisée (9) en direction dudit premier moyen de réflexion (2),
un moyen de sélection (6, 20, 30) prévu entre ledit prisme à retardateur de phase (40) et ledit milieu à effet laser dans ledit trajet lumineux afin de sélectionner une composante de longueur d'onde donnée à partir de ladite lumière, et
ledit prisme retardateur de phase (40) produisant ladite première composante polarisée et ladite seconde composante polarisée en réponse à ladite lumière.

15. Appareil à laser à bande étroite comprenant
un résonateur optique incluant des premier et second moyens de réflexion (2, 3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) prévu entre ledit premier moyen de réflexion (2) et ledit milieu à effet laser afin de transmettre partiellement une première composante polarisée (89) et de réfléchir une seconde composante polarisée (95),
un moyen de sélection (6, 20, 30) prévu entre ledit premier moyen de réflexion (2) et ledit premier moyen de séparation de faisceau polarisant afin de sélectionner une composante de longueur d'onde donnée à partir de ladite première composante polarisée (89),
un troisième moyen de réflexion (88) destiné à réfléchir en retour un rayon lumineux provenant dudit premier moyen de séparation de faisceau polarisant,
un moyen de conversion de polarisation (4, 40) prévu entre ledit premier moyen de séparation de faisceau polarisant et ledit troisième moyen de réflexion dans ledit trajet lumineux afin de convertir ladite première composante polarisée en ladite seconde composante polarisée en réponse à ladite lumière, et
un second moyen de séparation de faisceau polarisant (5) prévu entre ledit milieu à effet laser et ledit second moyen de réflexion (3) afin de transmettre une première composante polarisée (99) en tant que lumière de sortie et afin de réfléchir une seconde composante polarisée (98) en direction dudit second moyen de réflexion (3).

16. Appareil à laser à bande étroite comprenant
un résonateur optique incluant des premier et second moyens de réflexion (2, 3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) prévu entre ledit premier moyen de réflexion (2) et ledit milieu à effet laser afin de réfléchir partiellement une première composante polarisée (95) et de transmettre une seconde composante polarisée (89),
un moyen de sélection (6, 20, 30) prévu entre ledit premier moyen de réflexion (2) et ledit premier moyen de séparation de faisceau polarisant afin de sélectionner une composante de longueur d'onde donnée à partir de ladite première composante polarisée (95),
un troisième moyen de réflexion (88) destiné à réfléchir en retour un rayon lumineux provenant dudit premier moyen de séparation de faisceau polarisant,
un moyen de conversion de polarisation (4, 40) prévu entre ledit premier moyen de séparation de faisceau polarisant et ledit troisième moyen de réflexion dans ledit trajet lumineux afin de convertir ladite première composante polarisée en ladite seconde composante polarisée en réponse à ladite lumière, et
un second moyen de séparation de faisceau polarisant (5) prévu entre ledit milieu à effet laser et ledit second moyen de réflexion (3) afin de séparer ladite lumière en une première composante polarisée et une seconde composante polarisée.

17. Appareil à laser à bande étroite comprenant
un résonateur optique incluant un réseau de diffraction en échelle ou en échelons (60) et un second moyen de réflexion (3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) prévu entre ledit réseau de diffraction en échelle ou en échelons (60) et ledit milieu à effet laser afin de transmettre partiellement une première composante polarisée (89) et de réfléchir une seconde composante polarisée (95),
ledit réseau de diffraction en échelle ou en échelons sélectionnant une composante de longueur d'onde donnée à partir de ladite lumière,
un troisième moyen de réflexion (88) destiné à réfléchir en retour un rayon lumineux à partir dudit premier moyen de séparation de faisceau polarisant,
un moyen de conversion de polarisation (4, 40) prévu entre ledit premier moyen de séparation de faisceau polarisant et ledit troisième moyen de réflexion dans ledit trajet lumineux afin de convertir ladite première composante polarisée en ladite seconde composante polarisée en réponse à ladite lumière, et
un second moyen de séparation de faisceau polarisant (5) prévu entre ledit milieu à effet laser et ledit second moyen de réflexion (3) afin de transmettre une première composante polarisée (99) en tant que lumière de sortie et afin de réfléchir une seconde composante polarisée (98) en direction dudit second moyen de réflexion (3).

18. Appareil à laser à bande étroite comprenant
un résonateur optique incluant un réseau de diffraction en échelle ou en échelons (60) et un second moyen de réflexion (3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) pour prévu ledit réseau de diffraction en échelle ou en échelons (60) et ledit milieu à effet laser afin de réfléchir partiellement une première composante polarisée (95) et de transmettre une seconde composante polarisée (89),
ledit réseau de diffraction en échelle ou en échelons sélectionnant une composante de longueur d'onde donnée à partir de ladite lumière,
un troisième moyen de réflexion (88) destiné à réfléchir en retour un rayon lumineux provenant dudit premier moyen de séparation de faisceau polarisant,
un moyen de conversion de polarisation (4, 40) prévu entre ledit premier moyen de séparation de faisceau polarisant et ledit troisième moyen de réflexion dans ledit trajet lumineux afin de convertir ladite première composante polarisée en ladite seconde composante polarisée en réponse à ladite lumière, et
un second moyen de séparation de faisceau polarisant (5) prévu entre ledit milieu à effet laser et ledit second moyen de réflexion (3) afin de séparer ladite lumière en une première composante polarisée et une seconde composante polarisée (99).

19. Appareil à laser à bande étroite comprenant
un résonateur optique incluant des premier et second moyens de réflexion (2, 3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) prévu entre ledit premier moyen de réflexion (2) et ledit milieu à effet laser afin de transmettre partiellement une première composante polarisée (89) et une seconde composante polarisée (95),
un moyen de sélection (6, 20, 30) prévu entre ledit premier moyen de réflexion (2) et ledit premier moyen de séparation de faisceau polarisant afin de sélectionner une composante de longueur d'onde donnée à partir de ladite première composante polarisée (89),
un prisme retardateur de phase (40) dont une première surface est recouverte d'une couche de réflexion afin de réfléchir en retour un rayon lumineux provenant dudit premier moyen de séparation de faisceau polarisant, et afin de convertir ladite première composante polarisée en ladite seconde composante polarisée en réponse à ladite lumière, et
un second moyen de séparation de faisceau polarisant (5) prévu entre ledit milieu à effet laser et ledit second moyen de réflexion(3) afin de transmettre une première composante polarisée (99) en tant que lumière de sortie et afin de réfléchir une seconde composante polarisée (98) en direction dudit second moyen de réflexion (3).

20. Appareil à laser à bande étroite comprenant
un résonateur optique incluant des premier et second moyens de réflexion (2, 3),
un milieu à effet laser prévu dans le trajet lumineux dudit résonateur optique afin d'émettre de la lumière, ledit milieu à effet laser incluant un moyen d'excitation,
un premier moyen de séparation de faisceau polarisant (81) prévu entre ledit premier moyen de réflexion (2) et ledit milieu à effet laser afin de réfléchir partiellement une première composante polarisée (95) et de transmettre une seconde composante polarisée (89),
un moyen de sélection (6, 20, 30) prévu entre ledit premier moyen de réflexion (2) et ledit premier moyen de séparation de faisceau polarisant afin de sélectionner une composante de longueur d'onde donnée à partir de ladite première composante polarisée (95),
un prisme retardateur de phase (40) dont une première surface est recouverte d'une couche de réflexion afin de réfléchir en retour un rayon lumineux provenant dudit premier moyen de séparation de faisceau polarisant, et afin de convertir ladite première composante polarisée en ladite seconde composante polarisée en réponse à ladite lumière, et
un second moyen de séparation de faisceau polarisant (5) prevu entre ledit milieu à effet laser et ledit second moyen de réflexion (3) afin de séparer ladite lumière en une première composante polarisée et une seconde composante polarisée.

21. Appareil à laser à bande étroite selon l'une quelconque des revendications 1 à 14, caractérisé en ce que ledit moyen de séparation de faisceau polarisant comprend un prisme de Wollaston.

22. Appareil à laser à bande étroite selon l'une quelconque des revendications 1 à 8 ou 11 à 16, 19 ou 20, caractérisé en ce que ledit moyen de sélection comprend un interféromètre étalon de Fabry-Pérot (6).

23. Appareil à laser à bande étroite selon l'une quelconque des revendications 1 à 8 ou 11 à 16, 19 ou 20, caractérisé en ce que ledit moyen de sélection comprend un réseau de diffraction (20).

24. Appareil à laser à bande étroite selon l'une quelconque des revendications 1 à 8 ou 11 à 16, 19 ou 20, caractérisé en ce que ledit moyen de sélection comprend un prisme (30).

25. Appareil à laser à bande étroite selon l'une quelconque des revendications 1 à 14, caractérisé en ce que ledit moyen de séparation de faisceau polarisant comprend un séparateur de faisceau polarisant du type cube (115).

26. Appareil à laser à bande étroite selon l'une quelconque des revendications 1 à 14, caractérisé en ce que ledit moyen de séparation de faisceau polarisant comprend un prisme de séparation de faisceau polarisant (116), une couche multiple de diélectrique étant formée sur ledit prisme de séparation de faisceau polarisant (116).

27. Appareil à laser à bande étroite selon l'une quelconque des revendications précédentes, caractérisé en ce que ledit milieu à effet laser comprend un excimère incluant des gaz noble et d'halogène.

28. Appareil à laser à bande étroite selon l'une quelconque des revendications 1 à 10 ou 15 à 18, caractérisé en ce que ledit moyen de conversion polarisant (4) comprend une plaque de quartz.

29. Appareil à laser à bande étroite selon l'une quelconque des revendications 1 à 10 ou 15 à 18, caractérisé en ce que ledit moyen de conversion de polarisation comprend un miroir retardateur de phase (40).

30. Appareil à laser à bande étroite selon l'une quelconque des revendications 15 à 20, caractérisé en ce que ledit premier moyen de séparation de faisceau polarisant (81) comprend un séparateur de faisceau polarisant et un miroir semi-réfléchissant.
